# EUROPEAN PATENT SPECIFICATION

(11) **EP 2 693 803 B1**
(45) Date of publication and mention of the grant of the patent: **02.09.2020**
(21) Application number: 12178749.3
(22) Date of filing: 31.07.2012
(51) Int. Cl.: H04W 36/00

(54) **Methods, devices and computer program products for performing handover using a list of prepared cells**
Verfahren, Vorrichtungen und Computerprogrammprodukte zur Durchführung einer Weiterleitung mit der Nützung einer Liste von vorbereiteten Zellen
Procédés, dispositifs et produits programmes d'ordinateur pour la réalisation d'un transfert avec utilisation d'une liste de cellules préparées

(43) Date of publication of application: 05.02.2014
(73) Proprietor: BlackBerry Limited, Waterloo, ON N2K 0A7 (CA)
(72) Inventor: Burbidge, Richard Charles, Slough, Berkshire SL1 3XE (GB); Behnamfar, Firouz, Santa Clara, CA 95054 (US); Suzuki, Takashi, Tokyo, 151-0051 (JP)
(74) Representative: Gill Jennings & Every LLP

(56) References cited:
- EP-A1- 1 534 035
- US-A1- 2010 075 677
- US-A1- 2010 178 920
- QUALCOMM EUROPE: "Further evaluation of mobility performance in LTE", 3GPP DRAFT; R1-091446 FURTHER EVALUATIONS OF MOBILITY PERFORMANCE IN LTE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, South Korea; 20090323 - 20090327, 28 March 2009 (2009-03-28), XP050597371, [retrieved on 2009-03-28]
- HUAWEI: "Clean-ups on some open issues in 36.331", 3GPP DRAFT; R2-086640 R2#64 CLEAN-UPS ON 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20081110, 4 November 2008 (2008-11-04), XP050450894, [retrieved on 2008-11-04]

## Description

### Technical Field

The embodiments disclosed herein relate to devices and methods for use in cellular communication. In an exemplary embodiment, the embodiments relate to devices and methods which provide for improved handover from one cell to another in a cellular network. For example, the embodiments involve the transmission and/or receipt of handover information, which includes information of a plurality of target cells designated as possible targets for handover.

### Background

A cellular network used by a mobile device may cover an entire landmass, but will certainly extend over many thousands of square kilometres. However, since a single cellular network base station has, at the most, a maximum range of only a few tens of kilometres, and possibly less, it is necessary for a mobile device to be able to communicate with a plurality of base stations, and to cease communication with one cell (henceforth the 'source cell') and commence communication with another cell (henceforth the 'target cell') as the mobile device moves between the land areas served by those cells.

As the mobile device changes the cell used for communication, it must cease operating using the communication particulars of the source cell and commence communication using the communication particulars of the target cell. During this changeover, it is desirable for communication to continue unimpeded. In particular, it is preferred that voice calls and data sessions are not interrupted, delayed or lost during the changeover.

The changeover between cells is managed by a 'handover procedure'. To establish uniformity between multiple network operators and handset providers, the handover procedure is defined according to a set of standards. In respect of cellular networks serving some current and future mobile devices, certain relevant standards are set out in documents published by the body known as the 3rd Generation Partnership Project (3GPP). Several of these are available on the internet (http://www.3gpp.org), and are listed below:
- TS36.214 - "3rd Generation Partnership Project; Technical Specification Group Radio Access Network; Evolved Universal Terrestrial Radio Access (E-UTRA); Physical layer - measurements (Release 8)", V8.7.0, Sept. 2009;
- TS36.331 - "3rd Generation Partnership Project; Technical Specification Group Radio Access Network; Evolved Universal Terrestrial Radio Access (E-UTRA); Radio Resource Control (RRC); Protocol specification (Release 8)", V8.7.0, Sept. 2009;
- TS36.133 - "3rd Generation Partnership Project; Technical Specification Group Radio Access Network; Evolved Universal Terrestrial Radio Access (E-UTRA); Requirements for support of radio resource management", V8.7.0, Sept. 2009;
- TS36.304 - "3rd Generation Partnership Project; Technical Specification Group Radio Access Network; Evolved Universal Terrestrial Radio Access (E-UTRA); User Equipment (UE) procedures in idle mode", V8.7.0, Sept. 2009; and
- TS36.423 - "3rd Generation Partnership Project; Technical Specification Group Radio Access Network; Evolved Universal Terrestrial Radio Access (E-UTRA); X2 application protocol (X2AP)", V10.5.0, March. 2012.

This disclosure relates to improved handover and reestablishment procedures.

US 2010/0075677 A1 describes methods and systems for selecting a target base station with the best service supported in WiMAX handover. US 2010/0178920 A1 describes techniques for performing handover of a user equipment in a cell-to-base station manner.

### Summary of the Invention

The invention is set out in the appended claims.

### Brief Description of the Drawings

The present disclosure and the embodiments set out herein can be better understood with reference to the description of the embodiments set out below, in conjunction with the appended drawings wherein:
Fig. 1 is a diagram of an exemplary cellular network with a plurality of cells, base stations, mobile management entities and mobile devices;
Fig. 2 is a schematic of an exemplary base station for use in the cellular network of Fig. 1;
Fig. 3 is a schematic of an exemplary mobile device for use in the cellular network of Fig. 1;
Fig. 4 is a schematic of an exemplary mobile management entity for use in the cellular network of Fig. 1;
Fig. 5 is a plot of a first simulation showing the positions of a plurality of mobile devices with respect to a cell to which they are connected and its neighbouring cells;
Fig. 6 is a plot of a second simulation showing the positions of a plurality of mobile devices with respect to a cell to which they are connected and its neighbouring cells;
Fig. 7 is a flow diagram illustrating a first exemplary method for performing a handover operation with a plurality of target cells;
Fig. 8 is a flow diagram illustrating a second exemplary method for performing a handover operation with a plurality of target cells;
Fig. 9 is a diagram of an exemplary cellular network with a plurality of cells, base stations, mobile management entities and mobile devices;
Fig. 10 is a flow chart of an exemplary method performed by a mobile device for performing handover and reestablishment procedures;
Figs. 11A, 12A and 13A are flow charts of exemplary methods performed by a network component for performing a handover procedure; and
Figs. 11B, 12B and 13B are flow charts of exemplary methods performed by a mobile device for performing a handover procedure.

### Detailed Description

A wireless cellular communications network 1000 is a system for communicating with mobile devices 110a-110c across generally large distances such as over an entire landmass. Of course, cellular networks may also be smaller, but in any event are established by a plurality of fixed-location radio frequency transceivers known as base stations 102a-102g. Each base station 102a-102g is able to communicate with mobile devices 110a-110c wirelessly in the megahertz (MHz) and/or low gigahertz (GHz) radio frequency ranges, and up to a distance of a few tens of kilometres, although other ranges are possible.

Base stations 102a-102g may be spread across an area of land in such a way so as to provide complete network coverage; that is, to enable a mobile device 110a-110c to wirelessly access at least one base station 102a-102g wherever it is located in the area of land served by the base stations 102a-102g. Of course, cellular networks may exist which depart from this scenario and often coverage may be incomplete. A cellular network 1000 may be established by dividing an area served by the network into a plurality of adjacent areas called 'cells' 100a-1 00e. Each cell 100a-100e may be served by at least one base station 102a-102g. Base stations may serve more than one cell. Conventionally, cells may be represented as regular shapes, usually hexagonal, since this allows for convenient cell tessellation. However, cells may be any shape, regular or irregular, depending on the preferred implementation and factors such as, for example, signal characteristics, signal interference, geography, climatic conditions, or buildings or other structures within the cell.

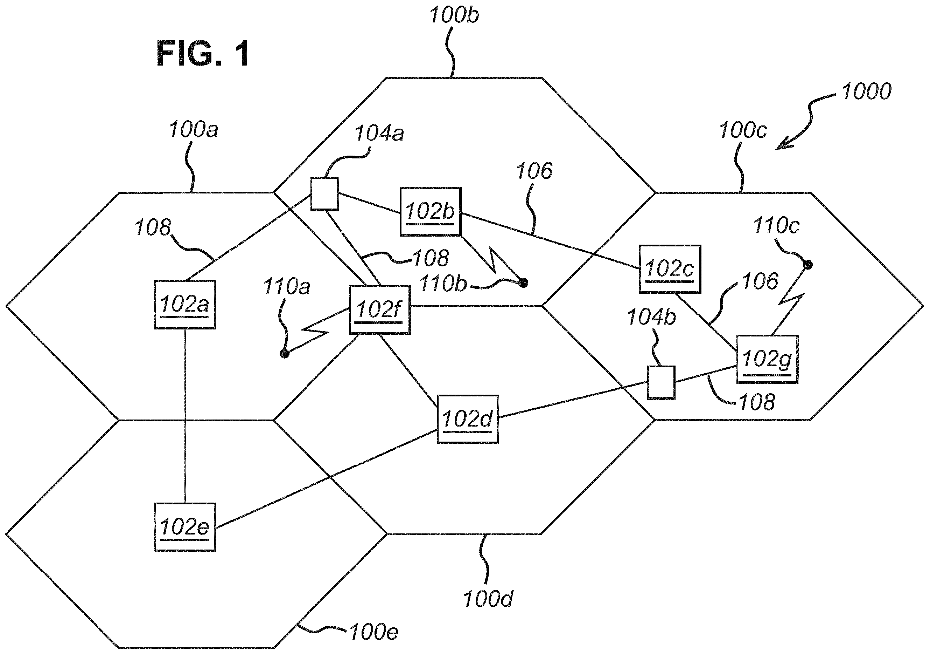

An example of a cellular network 1000 is shown in Fig. 1. Here five cells 100a - 100e are shown, each served by at least one base-station 102a - 102g. One of the cells, 100c, illustrated is served by two base stations 102c, 102g. Moreover, one of the base stations, 102f, illustrated serves three cells 100a, 100b and 100d. The skilled person will appreciate that the illustrated cellular network is a highly simplified example which illustrates the principle, and more complex arrangements of cells and base stations are possible.

Base stations may communicate with each other directly or they may communicate with each other indirectly via a mobile management entity (MME) 104a, 104b, or both. In the illustrated arrangement, base stations 102b and 102c, for instance, communicate with each other directly, for example using an 'X2 link' 106. Base stations 102a, 102b and 102f communicate with each other indirectly via MME 104a, for example using an 'S1 interface' 108.

As shown, at least some of the base stations are in communication with mobile devices 110a - 110c. In particular, base station 102f is in wireless communication with mobile device 110a via cell 100a; base station 102b is in wireless communication with mobile device 110b via cell 100b; and base station 102g is in wireless communication with mobile device 110c via cell 100c.

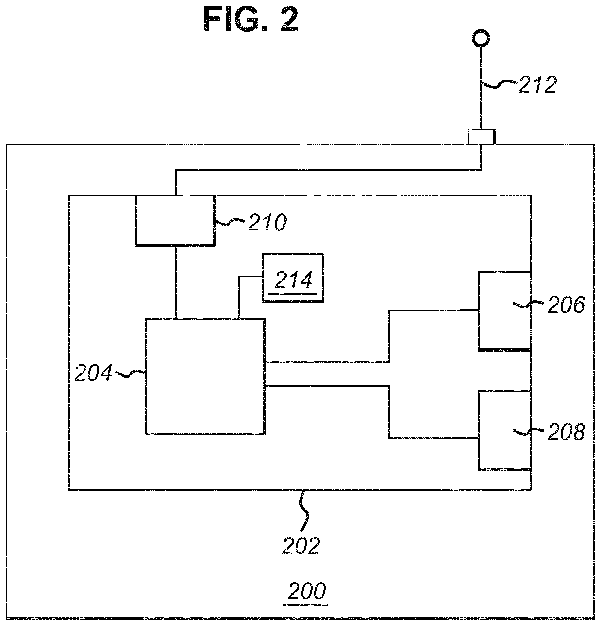

A schematic of a base station 200 is shown in Fig. 2. The base station 200 comprises a network component 202 comprising a processing unit 204, a first communications port 206 for communicating directly with another base station, for instance using an 'X2 link', and a second communications port 208 for communicating indirectly with another base station, for instance using an 'S1 interface'. The base station comprises a radio frequency (RF) transceiver 210 connected to an antenna 212 for communicating wirelessly with a plurality of mobile devices. The base station comprises a memory 214 connected to the processing unit 204 and adapted to execute computer readable instructions described in more detail below.

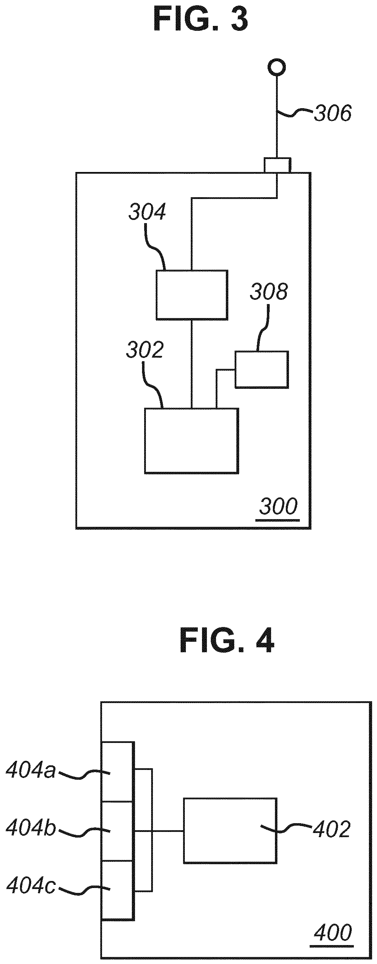

A schematic of a mobile management entity (MME) 400 is shown in Fig. 4. The MME comprises a processing unit 402 connected to a series of communications ports 404a - 404c for communicating with base stations, for instance using an 'S1 interface'.

Each cell 100a - 100e may be assigned a variety of communication particulars, including a plurality of frequencies over which the mobile device and base station 102a-102g can communicate, a particular bandwidth, a 'cell radio network temporary identifier' (C-RNTI) and a 'random access channel' (RACH) configuration. More or fewer communication particulars are also possible, and each cell 100a - 100e may be assigned one or more of the communication particulars. Adjacent cells 100a - 100d may use different frequencies over which the mobile device and base station can communicate. However, this is not essential. Adjacent or neighbouring cells 100a - 100e may use the same or different bandwidths, physical control channel configuration parameters, for example random access channel configuration parameters. For the purposes of this description, an adjacent cell is immediately adjacent, partially or wholly contained within, or partially or wholly overlapping another cell; whereas a neighbouring cell is close enough such that it is possible for a mobile device to receive signals from both cells. In Fig. 1, cells 102a and 102d are adjacent, for example, whereas cells 102b and 102e are neighbouring, because a mobile device located midway between the two could well receive signals from both (as well as from cells 102a and 102d).

For simplicity and in accordance with convention, the remaining description assumes a network of hexagonal cells, each cell served by a single base station located in the centre of the cell. However, this is purely for illustration and the scope of the appended claims is not limited to this simplified arrangement and may be implemented using any appropriate arrangement of cells and base stations. Moreover, whilst a mobile device may communicate with (or is 'served by') a base station (specifically a network component of that base-station), for conciseness the remaining description may refer to a mobile device communicating with or being 'served by' a cell. Likewise, the remaining description may refer to communication between a base station or network component or mobile device 'via' a cell. Wherever this language is used, it will be understood that what is meant is that the mobile device communicates with a base station or network component using the communication particulars provided for according to that cell.

A mobile device 110a-110e may be adapted to change the cell 100a-100e it uses for communication as it moves about in an area served by the cellular network 1000. The mobile device may cease operating using the communication particulars of its source cell and may commence communication using the communication particulars of a new target cell. This changeover between cells is called 'handover' and may be managed by a 'handover procedure'. As explained above, an existing handover procedure may be defined according to a set of standards, some of which are listed above. Of course, whilst adherence to standards is preferred, it is not essential.

A schematic of a mobile device 300 is shown in Fig. 3. The mobile device 300 comprises a processing unit 302 and radio frequency (RF) transceiver 304 connected to an antenna 306 for communicating wirelessly with a plurality of base-stations. The mobile device comprises a memory 308 connected to the processing unit 302 and adapted to execute computer readable instructions described in more detail below

In summary, one existing handover process operates as follows. This example will be based on mobile device 110a communicating with a source base station 102f via source cell 100a, however the skilled person will appreciate that other examples are possible. In accordance with the standards set out in TS36.214, a mobile device 110a periodically takes a set of measurements of the strength of signals received from the source cell 100a and any cells 100b - 100e neighbouring the source cell and creates a report detailing the measurements. As explained previously, for the purposes of this description *"neighbouring"* does not necessarily mean immediately adjacent, but includes cells which are close enough to the source cell to transmit signals which are received by the mobile device. The report is sent to the source cell 100a for processing by the network processors in source base station 102f. Based on the report sent by the mobile device 110a, the network processors will establish which cell the mobile device should communicate with. For example, if the mobile device reports that it is receiving stronger signals from a neighbouring cell such as 100e than from the source cell 100a, it may be determined that the mobile device should cease communication with the source cell 100a and commence communication with the neighbouring cell 100e. This determination is made by the network processors.

Upon determination that a mobile device 110a should change the cell with which it communicates (i.e. upon determination that a 'handover' should take place), the source cell 100a operating according to the standards may send a message known as a Radio Resource Control (RRC) message to the mobile device 110a. In this case, the message is an *"RRC Connection Reconfiguration"* message which indicates to the mobile device 110a that its cell connection requires reconfiguration. The message contains information sent from the base station 102f to effect handover, including an information element known as *"MobilityControlInfo".* This information element specifies one target cell 100e that the mobile device should attempt to connect to. Usually, the target cell will be the cell from which the mobile device reported the strongest signal. However, this is not always the case. For example, the target call may be the cell form which the mobile device reported the best quality signal.

In preparing for a handover procedure, the source cell may request one or more target cells to prepare for the handover by transferring mobile device context information to the one or more target cells and instructing the one or more target cells to reserve resources for the mobile device. In return, one or more of the target cells may return a positive response and thus become a "prepared cell". The source cell may also be considered a prepared cell. A prepared cell may therefore be the source cell 100a or one or more of the target cells, such as target cell 100e.

In attempting to connect to a target cell 100e, a mobile device 110a operating according to the standards will perform the following procedures. It will attempt to achieve time synchronization with the signals emitted by the base station in respect of the target cell; it will attempt to perform a random access procedure; and, if the foregoing processes are successful, it will attempt to start normal downlink (DL) and uplink (UL) data communication with the base station via the target cell. The UE may attempt to receive system information from the base station in respect of the target cell before, during, and/or after these procedures. Once the mobile device has successfully connected to the target cell, that cell becomes the source cell.

Occasionally, a mobile device 110a may be unable to connect to the target cell 100e. This may be because one of the aforementioned procedures fails or takes longer than a predetermined length of time due, possibly to due to poor radio channel conditions, or for other reasons. In this eventuality, the mobile device 110a will fail to connect to the target cell 100e or in other words, suffer 'handover failure'.

In more detail, handover may fail in a number of scenarios, which a mobile device operating according to the standards may encounter, as it attempts a handover procedure. These include the following:
1. Failing to synchronize with the target cell;
2. Failing to receive master information block (MIB) of the target cell;
3. Random access failure (random access itself is a multi-state procedure which may fail in any step due to poor channel conditions or erroneous UE/network behaviour);
4. Failing to receive system information blocks of the target cell; and
5. Failing to receive/apply target cell dedicated configuration, including security configuration

According to the standards, handover or connection failure may trigger what is known as an *"RRC Connection Reestablishment Procedure".* In accordance with the standards set in TS36.331, this procedure is initiated by the mobile device 110a, and involves the mobile device 110a selecting a cell with which it will attempt to communicate. If the cell selected by the mobile device during the RRC Connection Reestablishment procedure is a prepared cell and reestablishment of connection to the cell is successful, telecommunication proceeds largely uninterrupted. However, if the cell selected by the mobile device during the RRC Connection Reestablishment procedure is a not a prepared cell, the mobile device 110a will have no knowledge of the communication particulars, and the RRC connection of the mobile device will be released. This will terminate any extant mobile telecommunications, including telephone calls, data connections, and so on; and will thus be extremely disruptive for the mobile device user.

The following is based on an extract from TS36.304, and describes a cell selection process carried out by a mobile device during a reestablishment procedure according to the standards in more detail. A mobile device 110a-110c operating according to the standards may carry out cell selection in one of two ways. The first, known as *"Stored Information Cell Selection"* uses information on carrier frequencies and, optionally, cell parameters, which has been stored in the mobile device 110a-110c based on previously received MobilityControlInfo information elements from a base station 102a-102g, or from previously detected cells 100a-100e. Once the mobile device 110a-110c has found a suitable cell 100a-100e to connect to, it may attempt to connect to it. If no suitable cell 100a-100e is found, the mobile device 110a-110c may carry out the second cell selection procedure, known as *"Initial Cell Selection"*, which simply involves the mobile device 110a-110c scanning all available channels in the appropriate frequency bands to find a suitable cell 100a-100e. Once a suitable cell 100a-100e is found, the mobile device 110a-110c may attempt to connect to it.

In more detail, a cell selection criterion 'S' according to the standards is fulfilled when the 'cell selection receiving value' (dB) Sᵣₓₗₑᵥ > 0 and the 'cell selection quality value' (dB) S_{qual} > 0. These quantities are established according to the following explanation, in accordance with the standards set in TS36.101.

Let P_{EMAX} be the maximum transmission power level (in dBm) which a given mobile device may use when transmitting on the uplink communication channel in the source cell.

Let P_{PowerClass} be the maximum receiving output power (in dBm) of the given mobile device according to the mobile device's power class as defined in TS36.101.

If P_{EMAX} is greater than P_{PowerClass}, then let P_{compensation} be the difference between those values. Otherwise, set P_{compensation} to 0. In other words, let P_{compensation} be equal to max(P_{EMAX}-P_{PowerClass}, 0).

Let Qᵣₓₗₑᵥₘₑₐₛ be the measured cell receiving level value, and Q_{qualmeas} be the measured cell quality level value.

Let Qᵣₓₗₑᵥₘᵢₙ be the minimum required receiving level value in the cell, and Q_{qualmin} be the minimum required quality level value in the cell.

Let Q_{rxievminoffset} be the offset to the signalled Qᵣₓᵢₑᵥₘᵢₙ taken into account in the Srxiev evaluation as a result of a period search for a higher priority 'public land mobile network' (PLMN) whilst operating in the 'visited public land mobile network' (VPLMN), in accordance with the standards set out in TS36.423. Likewise, let Q_{qualminoffset} be the offset to the signalled Q_{qualmin} taken into account in the S_{qual} evaluation as a result of a period search for a higher priority PLMN whilst operating in the VPLMN. The signalled values Q_{rxlevminoffset} and Q_{qualminoffset} are only applied when a cell is evaluated for cell selection as a result of a periodic search for a higher priority PLMN while operating in a VPLMN. During the periodic search , the mobile device may check the 'S' criteria of a cell using parameter values stored from a different cell of this higher priority PLMN.

Following on from the above:
1. Sᵣₓₗₑᵥ = Qᵣₓₗₑᵥₘₑₐₛ - (Qᵣₓₗₑᵥₘᵢₙ + Q_{rxlevminoffset}) - P_{compensation}; and
2. S_{qual} = Q_{qualmeas} - (Q_{qualmin} + Q_{qualminoffset})

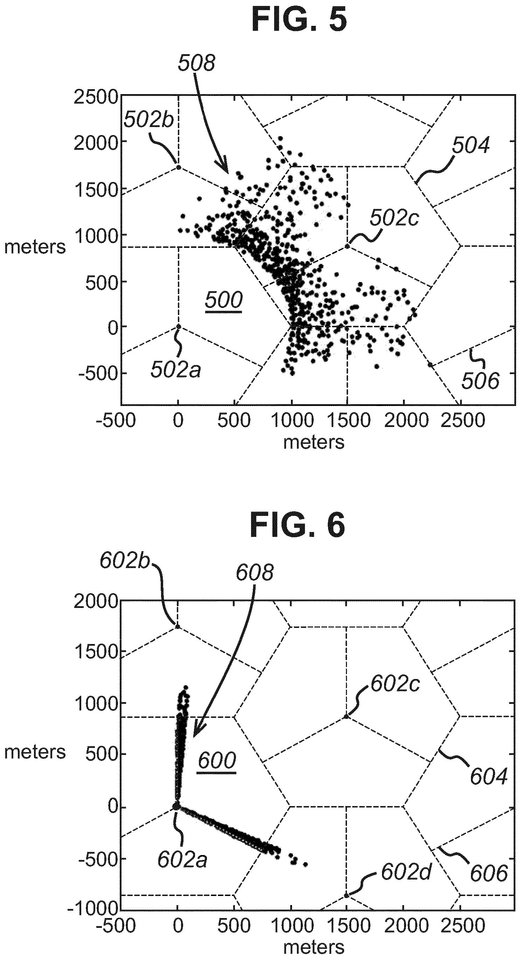

Confidential studies which are not part of the prior art and which have been carried out for the purposes of the present disclosure have shown that in at least 42.3% of handover failures, there is more than one (i.e. at least two) neighbouring cells which, at the time of handover failure, are providing a strong signal (i.e. at within a difference of at most 6 dB) to the mobile device. This is illustrated by a series of simulations shown in Figs. 5 and 6 and described below.

The first simulation is of a scenario shown in Fig. 5. This scenario will be referred to as the 'far' scenario. Fig. 5 illustrates a plan of a plurality of cells, including source cell 500. Each cell is served by a base station 502a - 502c and is bounded by cell borders 504, 506. Each mobile device 508 is represented by a dot and is served by source cell 500. In this scenario, each mobile device is at least one cell radius away from the base station of the source cell.

The second simulation is of a scenario shown in Fig. 6. This scenario will be referred to as the 'cell border' scenario. Again, Fig. 6 illustrates a plan of a plurality of cells, including source cell 600. Each cell is served by a base station 602a - 602d and is bounded by cell borders 604, 606. Each mobile device 608 is represented by a dot and is served by source cell 600. In this scenario, each mobile device is located along cell borders 606.

The third simulation is a combination of the first and second simulations and will be referred to as the 'cell-edge' scenario. In this scenario, each mobile device is located on a cell border or at least one cell radius away from the base station of the source cell.

For all three scenarios, the number of neighbouring cells that are within 6 dB of the source cell is collected. As mentioned above, the term *"neighbouring"* in this context does not necessarily mean immediately adjacent, but includes cells which are close enough to the source cell to transmit signals which are received by the mobile device.

Table 1 below presents the results of the three simulated scenarios. It shows the percentage of mobile devices for which a given number 'N' of neighbouring cells is within 6 dB of the source cell. For example, in the 'cell border' scenario, 57.7% of mobile devices have a neighbouring cell that is within 6 dB of the source cell.

**Table 1: Percentage of drops where the UE receives strong signals from neighbour cells**

| Number of neighbouring cells 'N' within 6 dB of the source cell | **Far** | **Cell borders** | **Cell edge** |
|---|---|---|---|
| 0 | 23.40% | 0.00% | 18.60% |
| 1 | 33.70% | 57.70% | 37.40% |
| 2 | 22.40% | 23.30% | 23.80% |
| 3 | 12.20% | 11.10% | 11.70% |
| 4 | 5.30% | 4.40% | 4.90% |
| 5 | 1.70% | 2.10% | 2.20% |
| 6 | 0.90% | 0.80% | 0.80% |
| N > 1 | 42.9% | 42.3% | 44.0% |

As apparent from the final line of table 1, in more than 40% of situations, there are more than one (i.e. at least two) neighbouring cells that are within 6 dB of the source cell. In other words, in more than 40% of situations, there is at least one other cell (in addition to the source cell and the target cell) that a mobile device could use for handover purposes, in case handover to the target cell fails.

Despite the availability of more than one cell suitable for being a target cell to which a mobile device could switch in at least 2 out of every 5 situations, current standards only specify one single target cell in the MobilityControllnfo information elements sent by the base station for initiating the handover procedure.

In some existing telecommunications networks, and referring again to Fig. 1, the source cell 100a may prepare a target cell 100e for a handover procedure, before transmitting the handover instruction. In this case, the base station 102a serving the source cell prepares all the required information including one or more of the aforementioned communication particulars; the security context; radio configurations; and radio access bear attributes. Upon receipt of the information from the base station 102a serving the source cell 100a, a base station 102e serving the target cell 100e may assign resources to support the mobile device 110a before the handover command is sent from the source cell to the mobile device.

As before, if the mobile device 110a fails to handover to the target cell 100e, the mobile device 110a may trigger the cell selection process and attempt connection to a cell of its own selection. The selected cell may not be a prepared cell, in which case all extant mobile telecommunications will be terminated.

According to the standards set out in TS36.331, before the base station 102a serving the source cell 100a sends a handover instruction to the mobile device 110a, it may prepare one or more target cells 100b, 100d, 100e with which the mobile device 110a may communicate after handover. In this case, the base station 102e serving the target cell 100e, for instance, generates the instruction for the mobile device 110a to perform the handover procedure, and the base station 102a serving the source cell 100a (and in communication with the mobile device) simply forwards the handover instruction to the mobile device 110a without altering the values or information content therein (i.e. transparently).

An exemplified MobilityControllnfo information element according to the standards set out in TS36.331 that provides the target cell information to the mobile device is as follows.

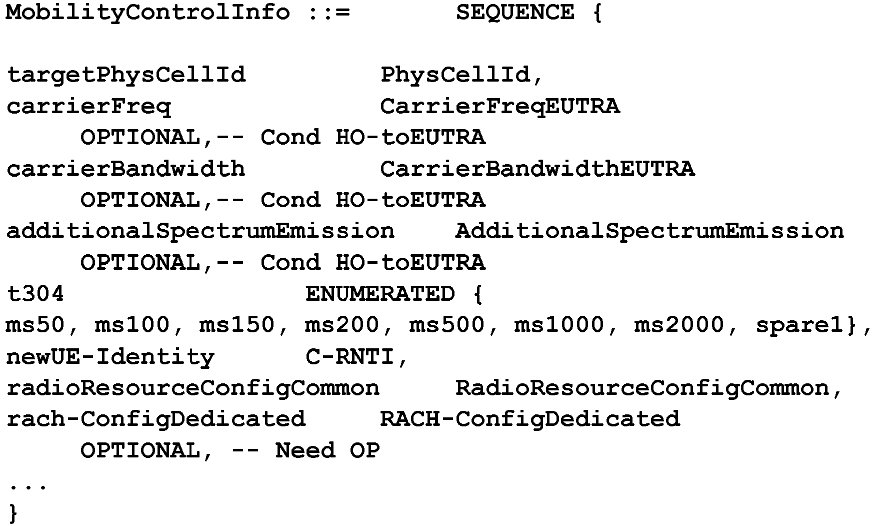

It will be apparent from the above element that the source base station may prepare communication particulars for more than one target cell. Nevertheless, even in this case the MobilityControllnfo information element will only ever specify one target cell to the mobile device. The communication particulars include bandwidth, 'cell radio network temporary identifier' (C-RNTI) and 'random access channel' (RACH) configuration.

In other systems, it is known that list of target base station identifiers (IDs) and a service level prediction of the target base stations is provided to the mobile device in a handover message. However in certain networks, the mobile device is required to have a target cell identifier (ID) and other essential information including target frequency and random access parameters, in order to perform a handover.

The following disclosure relates to an improved handover procedure which is not part of the prior art.

In one aspect, there is provided a method in a network component for use in a cellular network. The network has a plurality of cells. The method comprises transmitting handover information from the network component to the mobile device. The handover information comprises information including information of a plurality of target cells with which the mobile device may subsequently communicate. The handover information may include other information. The network component may be part of a base station, such as a source base station.

The mobile device may be connected to a source cell when receiving the handover information transmitted from the network component, and may be unconnected to any one of the plurality of target cells which are different to the source cell, or any other cell.

The network component may be in wireless communication with the mobile device prior to the transmission of handover information of the plurality of target cells. Alternatively, the network component may be in communication with another network component, which itself is in wireless communication with the mobile device prior to transmission.

Prior to the step of transmitting handover information, the method may comprise the optional step of receiving at the network component at least one communication parameter of the existing communication with the mobile device; for instance, communication with the source cell. The communication parameter may be one or more of signal strength and signal quality of the signal received from the network component.

Prior to the step of transmitting handover information, the method may comprise the optional step of receiving at the network component at least one communication parameter of at least one candidate target cell, or at least one other cell, transmitted from the mobile device and determining, by the network component, based on the at least one communication parameter, whether to transmit the handover information. The handover information is only transmitted if said determination is positive.

The method may further comprise the optional step of initiating a resource allocation procedure of the plurality of target cells. The resource allocation procedure may comprise one of two steps, namely: communicating directly with one or more network components of the plurality of target cells to reserve resources of said one or more network components of the plurality of target cells for the mobile device; or communicating with one or more network components of the plurality of target cells via a control network component to reserve resources of said one or more network components of the plurality of target cells for the mobile device.

After the mobile device has initiated communication with a network component via one of the plurality of target cells, the method may comprise the optional step of instructing release of resources of each of the one or more network components of the plurality target cells other than the network component with which the mobile device is in communication. The release instruction may come from a source base station or a target base station with which the mobile device has initiated communication. Alternatively, the resources may be released once a predetermined period of time has elapsed.

In a further aspect, there is provided a method in a mobile device for use in a cellular network. The mobile device may communicate wirelessly with a plurality of network components in a cellular network having a plurality of cells. The method comprises receiving handover information at the mobile device from a source cell of the cellular network (i.e. from a source network component of the plurality of network components), wherein the handover information comprises information including information of a plurality of target cells with which the mobile device may subsequently communicate. The handover information may include other information. The mobile device may be a mobile telephone such as a 'smart-phone'; a portable laptop computer; a tablet computer or any other mobile device adapted to communicate using a cellular network.

Immediately prior to the mobile device receiving the handover communication it may be in communication with a network component via the source cell. For instance, the mobile device may be connected to the source cell when receiving the handover information and may be unconnected to any one of the plurality of target cells which are different to the source cell, or to any other cell. The method may thus comprise the mobile device, after receiving the handover information: ceasing communication with said network component via said source cell; and attempting to connect to a network component via a first target cell, the first target cell being one of the plurality of target cells. Upon or after connecting with said network component, the mobile device may begin communicating with said network component via said first target cell.

Optionally, the mobile device determines which one of the plurality of target cells is to be the first target cell. However, this could be done instead by the source base station. The mobile device may determine a priority order for attempting connection to a network component via the plurality of target cells.

The mobile device may attempt to connect to a network component via the first target cell, the first target cell being one of the plurality of target cells, and upon or after a failure to connect to the network component via the first target cell, the mobile device may attempt to connect to a network component via a second target cell, the second target cell being the next target cell after the first target cell specified according to the priority order.

A failure to connect may be defined by one or more of the following events detectable by the mobile device: a communication synchronization failure of the mobile device with a network component via the first target cell; a failure of the mobile device to receive a master information block (MIB) of a network component via the first target cell; a failure of the mobile device to receive a system information block (SIB) of a network component via the first target cell; a random access failure in connecting to a network component via the first target cell; a failure to apply a given configuration required by a network component via the first target cell, such as a security configuration.

Prior to the step of receiving handover information, the mobile device may determine at least one communication parameter of existing communication with a network component via the source cell and transmit said at least one communication parameter of the existing communication from the mobile device to the network component.

Prior to the step of receiving handover information, the mobile device may determine at least one communication parameter of at least one candidate target cell or other cell; and transmit said at least one communication parameter of said at least one candidate target cell or other cell from the mobile device to the network component. The communication parameter may be one or more of signal strength and signal quality of the signal received from the network component.

After handover failure, the mobile device may attempt to perform a reestablishment procedure comprising attempting to connect to a network component via one of the plurality of target cells. For example, the mobile device may perform a reestablishment procedure comprising attempting to connect to a network component via the first target cell, being one of the plurality of target cells, and upon failure to connect to the network component via the first target cell, the mobile device may attempt to connect to a network component via a second target cell, being the next target cell after the first target cell specified according to the priority order.

Optionally, the handover information defines a priority order of the target cells.

Optionally, the handover information comprises: a target frequency value or range for communicating with a network component via each target cell; and access parameters for a network component communicable via each target cell. The handover information may comprise communication parameters of each target cell sufficient for the mobile device to initiate communication with a network component via each target cell without requiring prior coordination of each target cell for communicating with the mobile device. Preferably, the handover information is sufficient to enable the mobile device to perform a handover operation to a target cell. Therefore, the device does not require additional information to perform the handover.

The handover information may comprise cell identification information for one or more target cells.

The handover information may comprise communication parameters of a first target cell sufficient for the mobile device to attempt to initiate communication with the first target cell without requiring prior coordination of the first target cell and/or target cells for communicating with the mobile device, and further comprises cell identification information for each subsequent target cell. The handover information may comprise only cell identification information for each subsequent target cell. In this case, the source cell could coordinate each of the subsequent target cells for communication with the mobile device, such as by making the communication particulars the same as those of the source cell.

The handover information may comprise communication parameters of at least one target cell sufficient for the mobile device to initiate communication with a network component via the at least one target cell without requiring prior coordination of the at least one target cell and/or other target cells for communicating with the mobile device, wherein the handover information further comprises communication parameters of additional target cells comprising or consisting only of differences between required communication parameters of the additional target cells and the previously-transmitted communication parameters of the at least one target cell.

The handover information may be transmitted in a radio resource control (RRC) connection reconfiguration message transmitted to the mobile device.

In a further aspect, there is provided a network component for use in a cellular network, the network having a plurality of cells. The network component comprises: a processing unit configured to generate handover information; and a transmitter configured to transmit the handover information to a mobile device, wherein the handover information comprises information including information of a plurality of target cells with which the mobile device may subsequently communicate.

The processing unit may be further adapted to receive from the mobile device at least one communication parameter of the existing communication with the mobile device.

The processing unit may be further configured to receive at least one communication parameter of at least one candidate target cell transmitted from the mobile device; determine, based on the at least one communication parameter, whether to transmit the handover information; and transmit the handover information if said determination is positive.

Optionally, the processing unit may be further configured to initiate a resource allocation procedure of the plurality of target cells. To that end, the processing unit may be configured to communicate directly with network components of the plurality of target cells and reserve resources of the network components of the plurality of target cells for the mobile device; or communicate with the network components of the plurality of target cells via a control network component and reserve resources of the network components of the plurality of target cells for the mobile device.

The processing unit may be further configured to instruct release of resources of each of the network components of the plurality target cells other than the network component with which the mobile device is in communication. Alternatively, the resources may be released by a network component of a target cell, or once a predetermined period of time has elapsed.

In a further aspect, there is provided a mobile device for communicating in a cellular network. The mobile device may communicate wirelessly with the network, which may have a plurality of cells. The mobile device comprises: a receiver configured to receive handover information (e.g. from a network component); and a processing unit adapted to process the handover information, wherein the handover information comprises information including information of a plurality of target cells within which the mobile device can subsequently communicate.

The processing unit may be further configured to cease communication with a network component via a source cell upon receipt of the handover communication; and initiate communication with a network component via one of the plurality of target cells.

The processing unit may be further configured to connect to a network component via a first target cell, the first cell being one of the plurality of target cells, and communicate with said network component via said first target cell.

The processing unit may be further configured to determine which one of the plurality of target cells is to be the first target cell. However, this could be done instead by the source base station. For example, the mobile device may be further configured to determine a priority order for attempting connection to a network component via the plurality of target cells.

The processing unit may be further configured to attempt to connect to a network component via the first target cell, being one of the plurality of target cells, and upon failing to connect to the network component via the first target cell, attempt to connect to a network component via a second target cell, being the next target cell after the first target cell specified according to the priority order.

The processing unit may be further configured to connect to a network component via the second target cell, being one of the plurality of target cells, and communicate with said network component via said second target cell.

The processing unit may be further configured to determine at least one communication parameter of existing communication with a network component via the source cell; and transmitting said at least one communication parameter of the existing communication to the network component.

The processing unit may be further configured to determine at least one communication parameter of at least one candidate target cell; and transmit said at least one communication parameter of said at least one candidate target cell to the network component.

The processing unit may be further configured to perform a reestablishment procedure comprising attempting to connect to a network component via one of the plurality of target cells.

The processing unit may be further configured to perform a reestablishment procedure comprising attempting to connect to a network component via the first target cell, being one of the plurality of target cells, and on failing to connect to the network component via the first target cell, attempting to connect to a network component via a second target cell, being the next target cell after the first target cell specified according to the priority order.

In a further aspect there is provided a computer readable medium having computer readable instructions stored thereon, the instructions executable by a processor to cause the processor to generate handover information for use in a handover procedure of a mobile device operating within a cellular network, the handover information comprising information including information of a plurality of target cells with which the mobile device may subsequently communicate.

In a further aspect there is provided a computer readable medium having computer readable instructions stored thereon, the instructions adapted, when executed by a processor, to cause the processor to process handover information for use in a handover procedure of a mobile device operating within a cellular-based communications network having a plurality of cells, the handover information comprising information of a plurality of target cells within which the mobile device can subsequently communicate.

In a further aspect there is provided a method in a mobile device for use in a cellular network. The method comprises commencing a radio resource control (RRC) connection reestablishment procedure, the procedure comprising performing a cell selection operation wherein one or more target cells which the mobile device may select for re-establishment are specified in handover information previously received at the mobile device. However, it will be appreciated that the cell or cells which the mobile device may select for re-establishment need not be limited to those specified in the handover information, and may be known to the mobile device or detected as described above.

Prior to the step of commencing a radio resource control (RRC) connection reestablishment procedure, the method may further comprise receiving the handover information at the mobile device, and preferably attempting to connect to a first target cell. The mobile device may fail to connect to the first target cell or in other words may experience 'handover failure', the step of commencing a radio resource control (RRC) connection reestablishment procedure occurs upon or after handover failure. The first target cell may be a target cell specified in the handover information.

The handover information may comprise information of a plurality of target cells with which the mobile device may subsequently communicate. Prior to the step of commencing a radio resource control (RRC) connection reestablishment procedure, the method may further comprise the mobile device attempting to connect to a first target cell, being one of the plurality of target cells.

The handover information may be received in a radio resource control (RRC) connection reconfiguration message transmitted to the mobile device.

The method may further comprise the mobile device selecting a cell for reestablishment. The cell selected for reestablishment may be one of a plurality of cells, including one or more target cells specified in the handover information and one or more cells not specified in the handover information. The cells not specified in the handover information may be cells which are known to the mobile device, or cells which the mobile device detects.

The mobile device may determine which one of the plurality of cells is to be the first cell it selects for reestablishment. The mobile device may determine a priority order for the plurality of target cells to be selected for reestablishment. Thus, should the mobile device fail to connect to the first cell (i.e. fail to complete reestablishment with the first cell), the mobile device may attempt to connect to a second cell, being the next cell after the first cell specified according to the priority order.

The mobile device may prioritise selecting one kind of cell over another kind. For example, the mobile device may prioritise selecting or more target cells specified in the handover information over other cells (i.e. cells not specified in the handover information, such as cells which are known to the mobile device, or cells which the mobile device detects).

The method may comprise determining, by the mobile device, at least one signal parameter of one or more target cells specified in the handover information. The signal parameter may include one or more of signal quality and signal strength. The mobile device may select a cell for reestablishment based on the at least one signal parameter. For example, the cell selected for reestablishment may be a target cell specified in the handover information if the at least one signal parameter of the one or more target cells specified in the handover information is greater than a predetermined threshold. The predetermined threshold may be fixed or variable, and may be set by the mobile device, source cell or one or more target cells.

The method may comprise determining, by the mobile device, at least one signal parameter of a cell not specified in the handover information; and comparing the at least one signal parameter with at least one signal parameter of one or more target cells specified in the handover information. The mobile device may select a cell for reestablishment based on the comparison between the sets of at least one signal parameter. For example, the cell selected for reestablishment may be a target cell specified in the handover information if: the difference between a) the at least one signal parameter of the one or more target cells specified in the handover information, and b) the at least one signal parameter of the cell not specified in the handover information, is less than a predetermined threshold. Again, the predetermined threshold may be fixed or variable, and may be set by the mobile device, source cell or one or more target cells.

In a situation where more than one cell satisfies the condition required by the predetermined threshold, the cell selected for reestablishment may be the target cell specified in the handover information having the at least one signal parameter which is closest to the at least one signal parameter of the cell not specified in the handover information.

The cell selected for reestablishment may be the cell not specified in the handover information if: the difference between a) the at least one signal parameter of the one or more target cells specified in the handover information, and b) the at least one signal parameter of the cell not specified in the handover information, is greater than a predetermined threshold. Again, the predetermined threshold may be fixed or variable, and may be set by the mobile device, source cell or one or more target cells.

As discussed above with respect to the contents of the handover information, the handover information may comprise cell identification information for the one or more each target cell. The handover information may comprise only cell identification information for the one or more each target cell.

In a further aspect there is provided a method in a network component for use in a cellular network. The method comprises transmitting handover information for use in a reestablishment procedure from the network component to a mobile device; wherein the handover information comprises information of a target cell with which the mobile device may subsequently communicate.

The information handover comprises information of a plurality of target cells with which the mobile device may subsequently communicate. The handover information is transmitted in a radio resource control (RRC) connection reconfiguration message.

For at least one target cell specified in the handover information, the handover information may further specify a predetermined threshold indicating the minimum permissible level of signal parameter of the said at least one target cell specified in the handover information. The predetermined threshold may be fixed or variable. The at least one signal parameter may include one or more of signal quality and signal strength. The minimum permissible level prevents target cells not having the requisite parameter (for instance, having poor signal strength or poor signal quality) from being selected by the mobile device.

For at least one target cell specified in the handover information, the handover information may further specify a predetermined threshold indicating the maximum permissible difference between at least one signal parameter of the said at least one target cell specified in the handover information and at least one signal parameter of a cell not specified in the handover information. The predetermined threshold may be fixed or variable. The maximum permissible difference prevents target cells having a parameter which is too far from another (such as signal strength or signal quality too much lower than a detected cell, for example) from being selected.

The handover information may further specify that if the difference between a) the at least one signal parameter of the said at least one target cell specified in the handover information, and b) the at least one signal parameter of the cell not specified in the handover information, is less than a predetermined threshold, the mobile device should select the said at least one target cell specified in the handover information. Alternatively, the handover information may further specifies that if the difference between a) the at least one signal parameter of the said at least one target cell specified in the handover information, and b) the at least one signal parameter of the cell not specified in the handover information, is more than a predetermined threshold, the mobile device should select the cell not specified in the handover information.

As discussed above with respect to the contents of the handover information, the handover information may comprise cell identification information for the one or more each target cell. The handover information may comprise only cell identification information for the one or more each target cell.

In a further aspect, there is provided a mobile device for communicating in a cellular network. The mobile device comprises a receiver configured to receive handover information from one of a plurality of cells; and a processing unit adapted to process the handover information; wherein the processor is adapted to commence a radio resource control (RRC) connection reestablishment procedure and perform a cell selection operation wherein one or more target cells which the mobile device may select for re-establishment are specified in handover information previously received at the mobile device.

In a further aspect, there is provided a network component for use in a cellular network, the network having a plurality of cells, the network component comprising: a processing unit configured to generate handover information for use in a radio resource control (RRC) connection reestablishment procedure; a transmitter configured to transmit the handover information to a mobile device, wherein the handover information comprises information of a target cell with which the mobile device may subsequently communicate.

In a further aspect, there is provided a computer readable medium having computer readable instructions stored thereon, the instructions executable by a processor to cause the processor to process handover information for use in a radio resource control (RRC) connection reestablishment procedure of a mobile device operating within a cellular network.

In a further aspect, there is provided a computer readable medium having computer readable instructions stored thereon, the instructions executable by a processor to cause the processor to generate handover information for use in a radio resource control (RRC) connection reestablishment procedure of a mobile device operating within a cellular network.

The devices and methods described henceforth relate to a source base station which provides additional information to a mobile device to enable the mobile device to attempt to connect to one or more 'further' target base stations in addition to the first target base station so as to reduce the incidences of terminating mobile telecommunications in the event of handover failure.

The devices and methods described henceforth are particularly advantageous because the aforementioned studies have shown that it is often the case that a mobile device can receive suitably strong signals to support mobile telecommunication from more than one cell; yet following conventional communication standards, none of the strong cells may be a prepared cell. The devices and methods described henceforth permit information of more than one target or prepared cell to be sent to the mobile device, optionally in a priority order. This facilitates the mobile device in connecting to a target cell without terminating mobile communication.

Moreover, it will be appreciated that when the target and source cells have weak signals, the mobile device has no option but to attempt to establish connection to one of the cells and then wait for the network to signal a new target cell according to measurement results. Normal downlink and uplink operations may require retransmission of data, or trigger transmission failure in such cases. Furthermore, the optional processes of performing measurements, triggering reports, negotiating a new target cell, and finally signalling the new target cell to the mobile device are time-consuming. During this time the mobile device may go out of coverage. The devices and methods described henceforth permit the mobile device to attempt a handover to a better target cell, thereby reducing call interruption times and delay.

The devices and methods described henceforth reduce the number of handover negotiations and handover failures in the network and hence reduce network communication loads.

The devices and methods described henceforth may be applicable to any radio access technology where some form of mobility is supported. As such, they might be applicable, but not limited, to: 'Evolved Universal Terrestrial Radio Access' (E-UTRA) 'Long Term Evolution' (LTE); 'Universal Mobile Telecommunications System' (UMTS); and 'Code Divisional Multiple Access' (CDMA) at least. However, the detailed exemplary description below concerns radio access technology in the form of LTE/E-UTRA (Release 8 and Release 9) for conciseness.

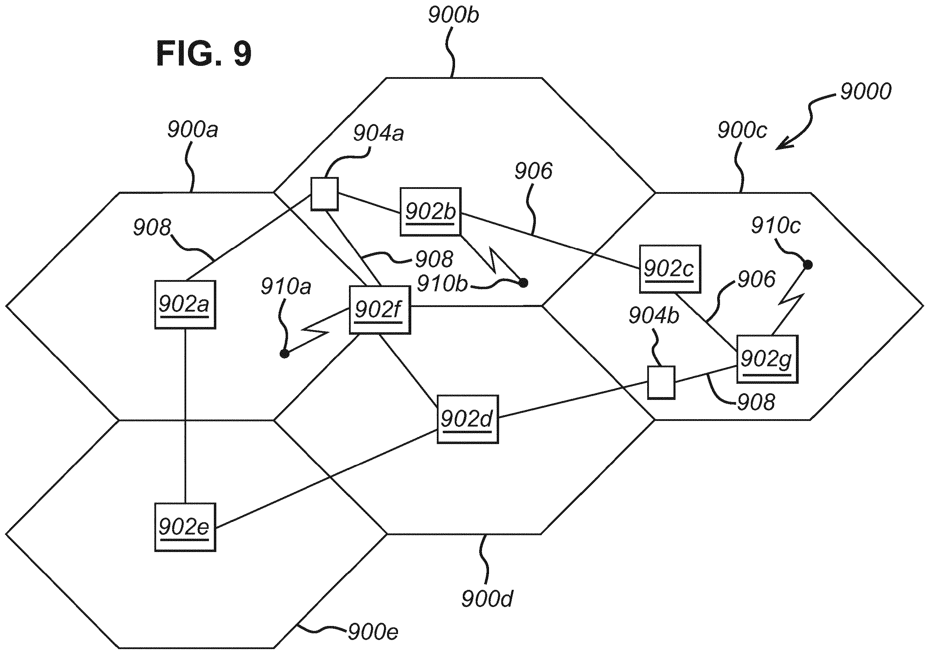

An example of a cellular network 9000 is shown in Fig. 9. Here five cells 900a - 900e are shown, each served by at least one base-station 902a - 902g. One of the cells, 900c, illustrated is served by two base stations 902c, 902g. Moreover, one of the base stations, 902f, illustrated serves three cells 902a, 902b and 902d. The skilled person will appreciate that the illustrated cellular network is an example which illustrates the principle, and more complex arrangements of cells and base stations are possible. With the exception of the following description, cellular network 9000 comprises corresponding components to cellular network 1000 described with reference to Fig. 1. The same is true of base station 200 of Fig. 2, mobile device 300 of Fig. 3 and mobile management entity400 of Fig. 4.

At least one of the mobile devices 910a - 910c, base-stations 902a-902g, cells 900a-900e, mobile management entity 904a, 904b and corresponding methods described henceforth are adapted to utilise a MobilityControllnfo information element which specifies more than one target cell. For example, whilst a base station serving a source cell may specify only one target cell to a mobile device with which it is in communication, it may also be adapted to specify more than one (i.e. two or more) target cells. Likewise, a mobile device may be adapted to attempt handover with more than one target cell and/or initiate the reestablishment procedure with more than one target cell.

For example, with reference to Fig. 9, when the source base station 902a prepares multiple target cells, such as 900b, 900d and 900e, a list of the prepared cells 900b, 900d and 900e may be indicated as candidate target cells. The mobile device 910a may apply the existing handover procedure for each target cell 900b, 900d and 900e in accordance with standards set out in TS36.331. If the mobile device 910a fails all or some of the target cells 900b, 900d and 900e provided, the mobile device 910a may perform a reestablishment procedure as described above and in accordance with the current standards set out in TS36.331. Optionally, the source base station 902a may indicate whether information on one or multiple target cells 900b, 900d and 900e will be provided. For example, the source base station may include multiple target cells 900b, 900d and 900e when the source base station 902a has radio link failure reports more than a given threshold. Alternatively, when a time critical service is being received by the mobile device 910a or sufficient network resources are not available, the source base station 902a may limit the number of target cells to one or a small number such as one, two, three, four or more, or the source base station 902a may set the mobile device 910a a shorter period of time for the mobile device 910a to complete a handover attempt to each of the multiple target cells 900b, 900d and 900e.

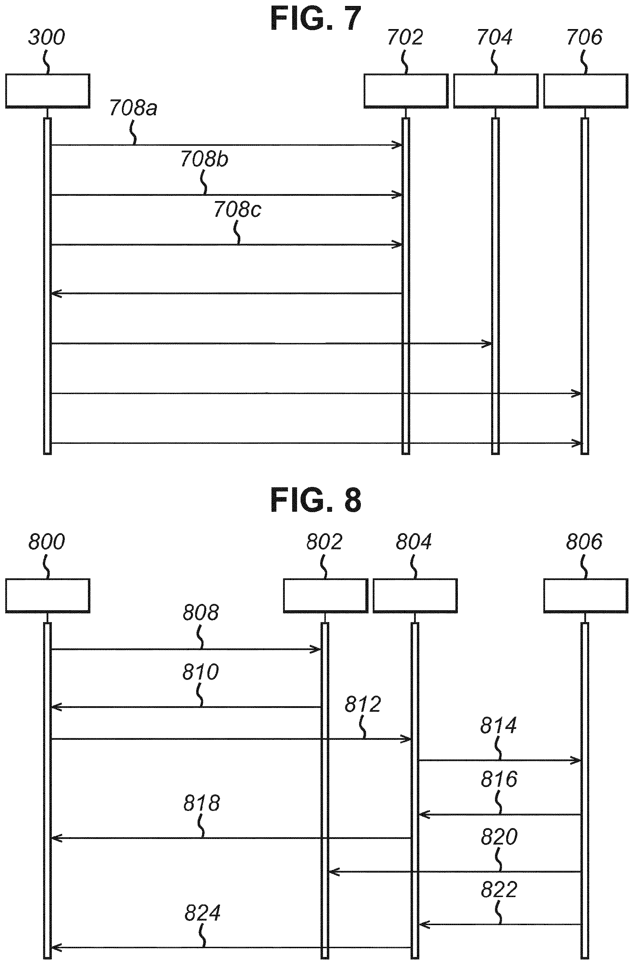

A first exemplary method according to foregoing description is illustrated in Fig. 7 which illustrates the messages which may be sent between a mobile device 700, a source base station 702 serving a source cell; a first target base station 704 serving a first target cell; and a second target base station 706 serving a second target cell.

The mobile device 700 may be initially wirelessly connected for communications to the base station 702 serving the source cell. As is conventional, the mobile device 700 may perform measurements of the strength of any signals received from the source cell and neighbouring cells and periodically send a report (708a - 708c) to the source cell for processing.

The base station 702 serving the source cell, or a processor coupled to that base station 702, may analyse the report and may then evaluate whether the mobile device 700 should continue to be served by the source cell, or whether it would be better served by a neighbouring cell. Once it is determined that the mobile device might be better served by a neighbouring cell, the source cell may prepare an RRC Connection Reconfiguration message that indicates to the mobile device 700 that its cell connection requires reconfiguration. This message may contain information sent from the source base station 702 to effect handover, including an information element known as MobilityControllnfo.

In the example shown in Fig. 7, the MobilityControllnfo sent by the source base station 702 may contains instructions for the mobile device 700 to:
1) attempt a handover procedure to cease its connection to the source base station 702 serving the source cell and establish a connection with the first target cell;
   and, if handover fails (for example, is not complete after expiry of the T304 timer):
2) attempt a handover procedure to cease its connection to the source base station 702 serving the source cell and establish a connection with the second target cell.

Whilst only two target base stations and corresponding target cells are illustrated in this embodiment, it will be appreciated that any number of target base stations and target cells may be employed, and the MobilityControllnfo may accordingly contain instructions for the mobile device 700 to attempt connection to any number of target base stations serving any number of target cells following handover failure. In that regard, it will be appreciated that a target base station may serve more than one target cell, and a target cell may be serviced by more than one target base station.

In the example shown in Fig. 7, the MobilityControllnfo specifies a list of target cells, each entry may contain the complete communication particulars of each target cell suitable for the mobile device 700 to connect to the base station serving that cell, including the bandwidth, C-RNTI and RACH configuration. Since complete information for each target cell is provided to the mobile device, the embodiment of Fig. 7 may be particularly flexible for inter-frequency handover cases.

In the illustrated example, the list of target cells is in the priority order in which the mobile device is to attempt to handover to them. However, the list could be in a different order, or no order at all. Moreover, it could be left to the mobile device to select the order in which handover is attempted.

An example specification of the MobilityControllnfo suitable for putting the embodiment shown in Fig. 7 into effect is given below. The text between the symbol '***' is a change with respect to the current RRC specification given in TS36.331.

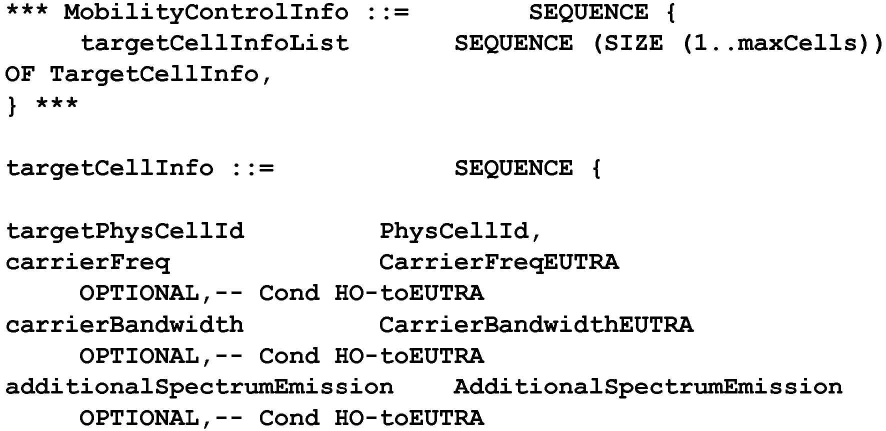

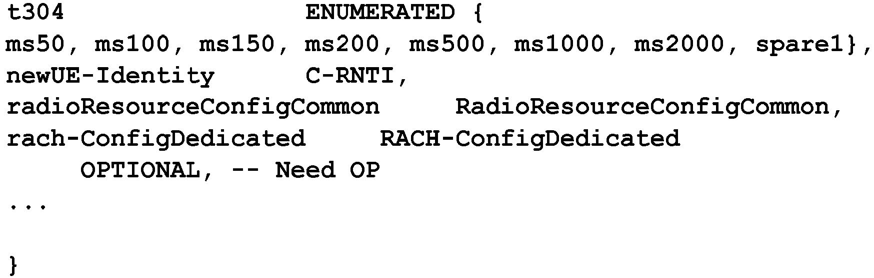

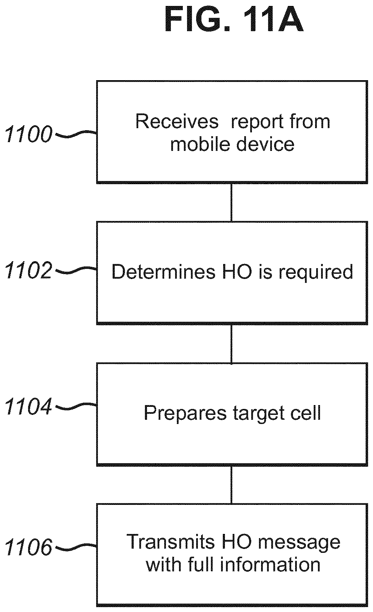

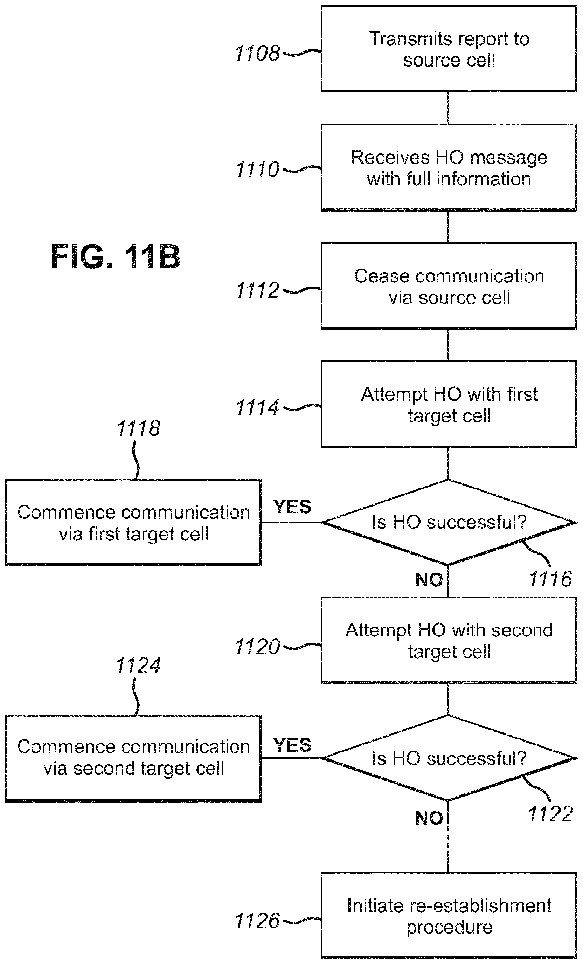

Flow charts illustrating the first exemplary method are shown in Figs. 11A and 11B.

As shown in Fig. 11A, the source base station receives 1100 a report from a mobile device indicating communication parameters such as signal strength and signal quality in respect of one or more of the source cell, and one or more of the neighbouring cells. This step is optional, however. If certain conditions (described above) are met, the source base-station will determine 1102 that the mobile device should be communicating with a different cell (i.e. determine that a handover is required) and will prepare 1104 a list of target cells to which the mobile device may handover. The source base station will transmit 1106 a handover message (described above) containing the complete communication particulars of each target cell suitable for the mobile device to connect to the target base station.

As shown in Fig. 11B, the mobile device transmits 1108 to the source base station a report indicating communication parameters such as signal strength and signal quality in respect of one or more of the source cell, and one or more of the neighbouring cells. This step is optional, however. At some point, the mobile device will receive 1110 a handover message from the source base station. As described above, the handover message contains the complete communication particulars of each target cell suitable for the mobile device to connect to a target base station. The mobile device will then cease communication 1112 with the source cell and attempt to handover 1114 to the first target cell in the plurality of target cells in the handover message. If handover is successful 1116, the mobile device will commence communication 1118 with the first target cell. If handover is unsuccessful 1116, the mobile device will attempt to handover 1120 to the second target cell in the plurality of target cells in the handover message. If handover is successful 1122, the mobile device will commence communication 1124 with the second target cell. If handover is unsuccessful 1122, the process may be repeated for each of the plurality of target cells in the handover message. If handover is unsuccessful for each of the plurality of target cells in the handover message, the mobile device may initiate a reestablishment procedure 1126, as described above.

A second exemplary method differs from the first method illustrated in Figs. 3 and 11A and B in the following respects.

Instead of providing the mobile device with the complete communication particulars of each of the target cells listed in the MobilityControllnfo, the complete communication particulars of the first target cell listed in the MobilityControllnfo may be provided, and only the physical cell identity of the further target cells may be provided. It will be appreciated that when only the physical cell identity of each of the plurality of further target cells is provided in the MobilityControllnfo element of the RRC Connection Reconfiguration message, the size of the message is reduced as compared with the message required in the method above.

The second exemplary method is possible because in some instances, all cells belonging to a given network will have the same bandwidth. Moreover, certain mobile devices may be capable of detecting the bandwidth of a given target cell. Accordingly, it is not always necessary to provide the mobile device with the bandwidth information. Furthermore, as will be described below with reference to Fig. 4, it is possible to configure base stations of a cellular network in such a way as to remove the need to inform a mobile device of all communication particulars for the target cells by coordinating all the target cells to use the same resources.

An example specification of the MobilityControllnfo suitable for putting the second exemplary method into effect is given below. Again, the text between the symbol '***' is a change with respect to the current RRC specification given in TS36.331, and the text in '[['/']]' is text that is removed.

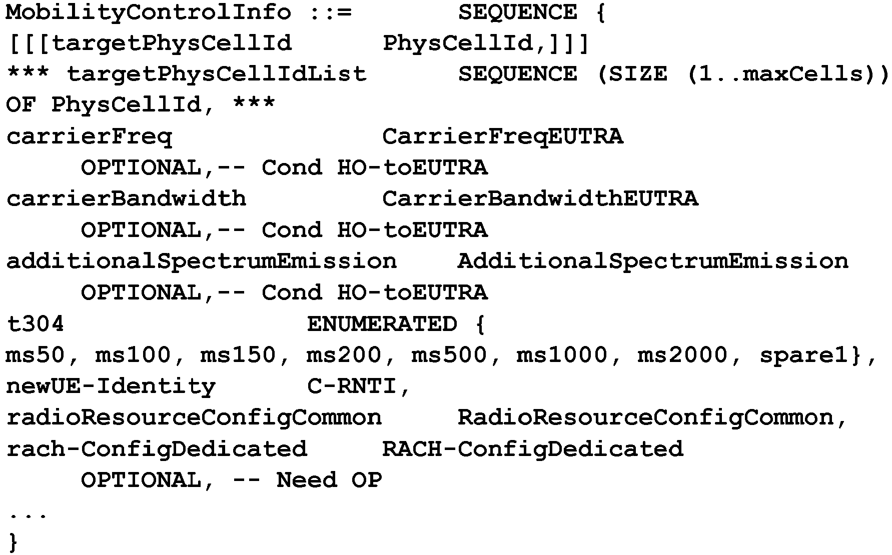

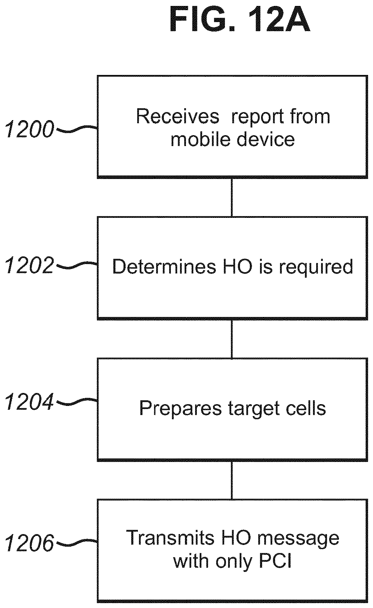

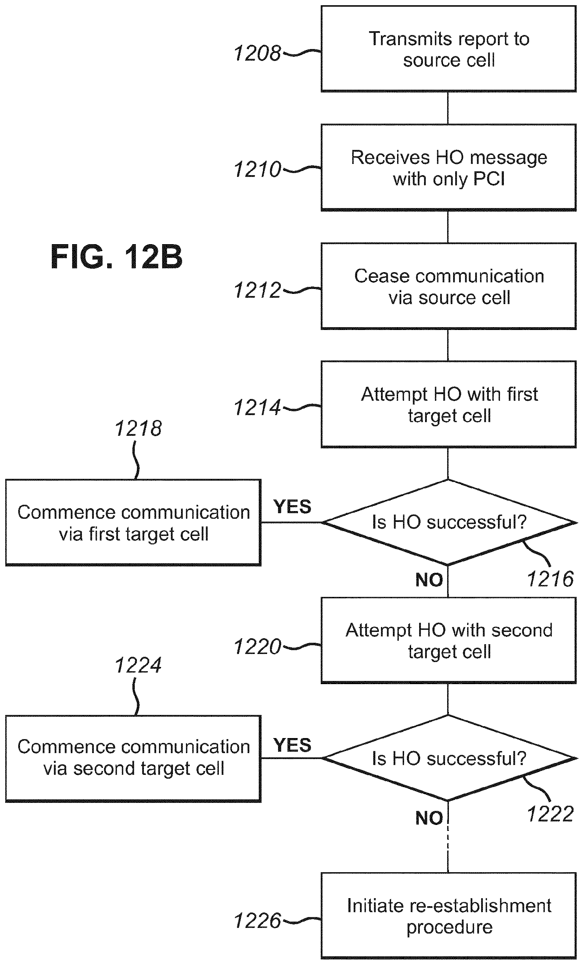

Flow charts illustrating the second exemplary method are shown in Figs. 12A and 12B. As can be seen, the flow charts of Figs. 12A and 12B are the same as those in 11A and 11B, except for the content of the handover message, which provides only the physical identity of the target cells.

According, the source base station receives 1200 a report from a mobile device indicating communication parameters such as signal strength and signal quality in respect of one or more of the source cell, and one or more of the neighbouring cells. This step is optional, however. If certain conditions (described above) are met, the source base-station will determine 1202 that the mobile device should be communicating with a different cell (i.e. determine that a handover is required) and will prepare 1204 a list of target cells to which the mobile device may handover. The source base station will transmit 1206 a handover message (described above) containing the complete communication particulars of the first target cell and only the physical identity of each further target cell.

As shown in Fig. 12B, the mobile device transmits 1208 to the source base station a report indicating communication parameters such as signal strength and signal quality in respect of one or more of the source cell, and one or more of the neighbouring cells. This step is optional, however. At some point, the mobile device will receive 1210 a handover message from the source base station. As described above, the handover message contains the complete communication particulars of the first target cell and only the physical identity of the plurality of further target cells which the mobile device may attempt to connect to. The mobile device will then cease communication 1212 with the source cell and attempt to handover 1214 to the first target cell in the plurality of target cells in the handover message. If handover is successful 1216, the mobile device will commence communication 1218 with the first target cell. If handover is unsuccessful 1216, the mobile device will attempt to handover 1220 to the second target cell in the plurality of target cells in the handover message. If handover is successful 1222, the mobile device will commence communication 1224 with the second target cell. If handover is unsuccessful 1222, the process may be repeated for each of the plurality of target cells in the handover message. If handover is unsuccessful for each of the plurality of target cells in the handover message, the mobile device may initiate a reestablishment procedure 1226, as described above.

A third exemplary method differs from the first and second methods illustrated in Fig. 3 and described above in the following respects.

Instead of providing the mobile device with the complete communication particulars of each of the target cells (as with the first method) and instead of omitting the communication particulars and providing the mobile device with only the physical cell identity (as with the second method), the third method provides an alternative approach.

In this third method, the communication particulars of target cells are prepared by the base stations serving the target cells themselves and are then sent to the source cell. The plurality of target cells listed in the MobilityControllnfo element of the RRC Connection Reconfiguration message sent by the source cell to the mobile device may be specified not in terms of their complete communication particulars, or solely by their physical cell identity, but in terms of differences (i.e. deltas) with the particulars of the source cell. As with the second method, the complete communication particulars of the first target cell are provided.

The differences with the given target cell may include only the physical cell identity or may include all fields of the complete configuration of the MobilityControllnfo element, depending how different the target cells are.

An example specification of the MobilityControllnfo suitable for putting the third method into effect is given below. Again, the text between the symbol '***' is an addition with respect to the current RRC specification given in TS36.331, and the text in '[['/']]' is text that is removed.

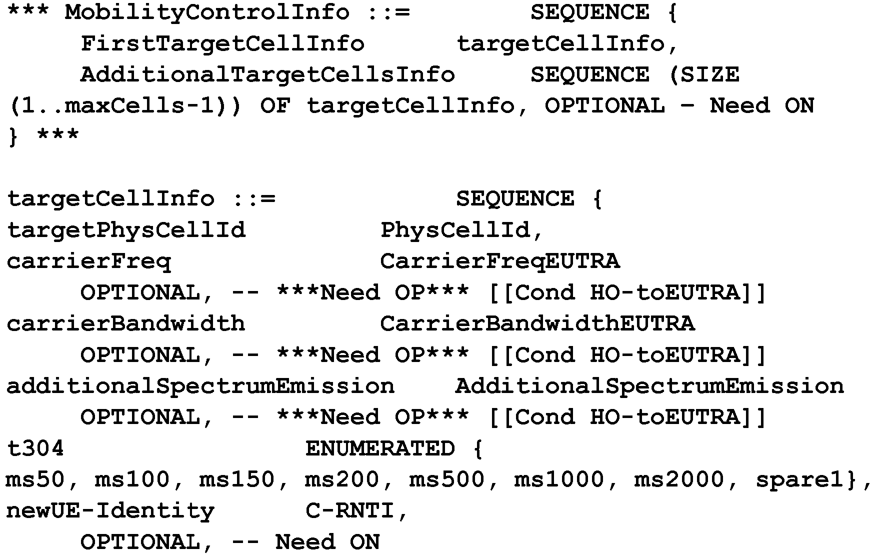

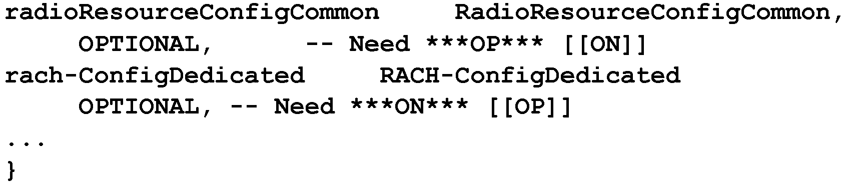

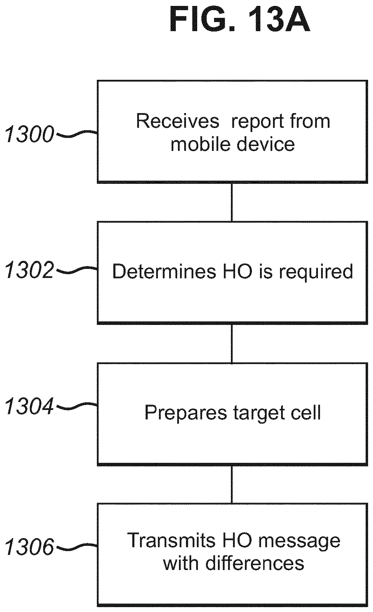

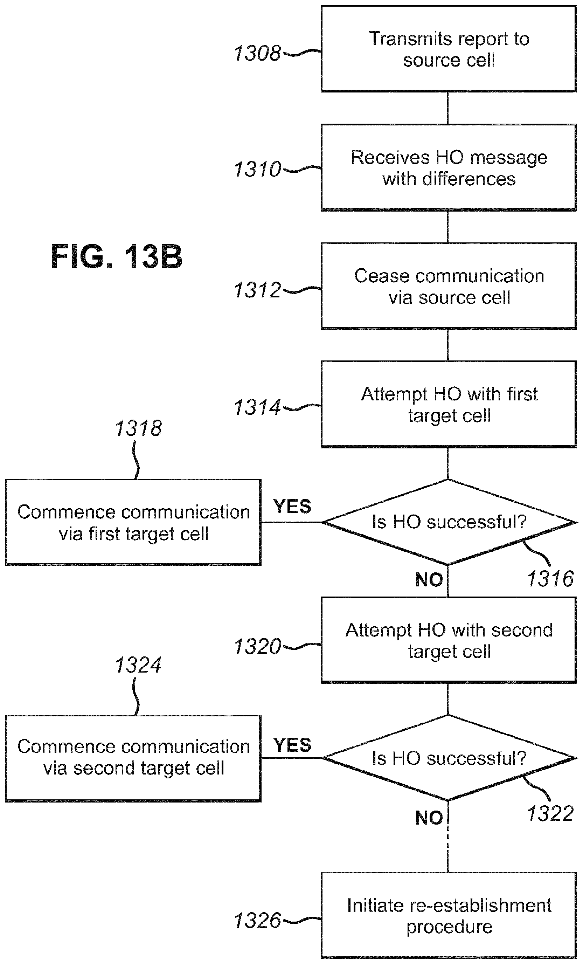

Flow charts illustrating the third exemplary method are shown in Figs. 13A and 13B. As can be seen, the flow charts of Figs. 13A and 13B are the same as those in 12A and 12B, except for the content of the handover message, which provides only the differences between the communication particulars of the targets cells from the source cell.

Accordingly, the source base station receives 1300 a report from a mobile device indicating communication parameters such as signal strength and signal quality in respect of one or more of the source cell, and one or more of the neighbouring cells. This step is optional, however. If certain conditions (described above) are met, the source base-station will determine 1302 that the mobile device should be communicating with a different cell (i.e. determine that a handover is required) and will prepare 1304 a list of target cells to which the mobile device may handover. The source base station will transmit 1306 a handover message (described above) containing the complete communication particulars of the first target cell and the differences between the communication particulars of the further targets cells and the first target cell.

As shown in Fig. 13B, the mobile device transmits 1308 to the source base station a report indicating communication parameters such as signal strength and signal quality in respect of one or more of the source cell, and one or more of the neighbouring cells. This step is optional, however. At some point, the mobile device will receive 1310 a handover message from the source base station. As described above, the handover message contains the complete communication particulars of the first target cell and the differences between the communication particulars of the further target cells with which the mobile device may handover and the first target cell. The mobile device will then cease communication 1312 with the source cell and attempt to handover 1314 to the first target cell in the plurality of target cells in the handover message. If handover is successful 1316, the mobile device will commence communication 1318 with the first target cell. If handover is unsuccessful 1316, the mobile device will attempt to handover 1320 to the second target cell in the plurality of target cells in the handover message. If handover is successful 1322, the mobile device will commence communication 1324 with the second target cell. If handover is unsuccessful 1322, the process may be repeated for each of the plurality of target cells in the handover message. If handover is unsuccessful for each of the plurality of target cells in the handover message, the mobile device may initiate a reestablishment procedure 1326, as described above.

As mentioned above, it is possible to configure base stations of a cellular network to remove the requirement for the source base station to transmit some or all of the communication particulars for the target cells to the mobile device. In summary, this process involves the source base station negotiating the same communication particulars such as C-RNTI and RACH configuration for the target cells as the source cell, or for further target cells as the first cell. This procedure may be implemented with any of the first to third methods described above. This procedure is explained in more detail below, with reference to Fig. 8 which illustrates the messages that may be sent between a source base station 800 serving a source cell; a first target base station 802 serving a first target cell; and a second target base station 806 serving a second target cell, optionally via a mobility management entity (MME) 804. The source base station is configured to negotiate with one or more target base stations either through a direct connection, such as an 'X2 link' or through an indirect connection, such as an 'S1 interface' with the MME. In the example shown in the figures, the base station 800 serving the source cell communicates with the base station 802 serving the first target cell directly, such as over an X2 link; whilst it communicates with the base station 806 serving the second target cell indirectly, such as via an S1 interface with MME 804.

As before, the mobile device (not shown) may initially be wirelessly connected to the base station 800 serving the source cell. As is conventional, the mobile device performs measurements of the strength of any signals received from the source cell and neighbouring cells and periodically sends a report (not shown) to the source cell 800 for processing.

The base station 800 serving the source cell, or a processor coupled to that base station 800, analyses the report and evaluates whether the mobile device should continue to be served by the source cell, or whether it would be better served by a neighbouring cell.

Once it is determined that the mobile device might be better served by a neighbouring cell, the source base station 800 sends a HANDOVER REQUEST message 808 to the first target base station 802 directly, for instance via an X2 link. The first target base station will reserve the necessary resources, such as radio bearers and the C-RNTI, which are indicated by the source base station 800. The first target base station will then send a HANDOVER REQUEST ACKNOWLEDGE message 810 to the source base station 800, for instance via an X2 link.

At the same time, the source base station 800 sends a HANDOVER REQUIRED message 812 via an S1 interface to the MME 404. Upon receipt of the HANDOVER REQUIRED message 812 from the source base station 800, the MME forwards a HANDOVER REQUEST message 814 to the second target base station 806. The second target base station 806 will reserve the necessary resources, such as radio bearers and the C-RNTI, which are indicated by the source base station 800. The second target base station 806 then sends a HANDOVER REQUEST ACKNOWLEDGE 816 message to the MME 804 and the MME 804 will then send a HANDOVER COMMAND 818 to the source base station.

In the embodiment of Fig. 8, assume that the mobile device attempts to handover to the first target base station 802, but fails. Assume also that the mobile device then attempts to handover to the second target-base station 806, and succeeds.

Once the mobile device has been identified in the second target base station, the second target base station will send a HANDOVER NOTIFY message 822 to the MME, which will be forwarded 824 to the source cell. Of course, if the mobile device had succeeded in handing over to the first target base station, a HANDOVER NOTIFY message would have been sent from the first target base station to the source cell via the X2 link.

Once the UE succeeded handover to one of the target cells, the reserved resource of the other candidate cells will be released. The release may be explicitly signalled such as by a RELEASE RESOURCES message 820 which, in the case of the method shown in Fig. 8, is sent from the second target base station to the first target base station. Alternatively, the release may be triggered by expiry of timer started when the resource is initially reserved or the source base station 800 may send the message 820 to the first base station 802.

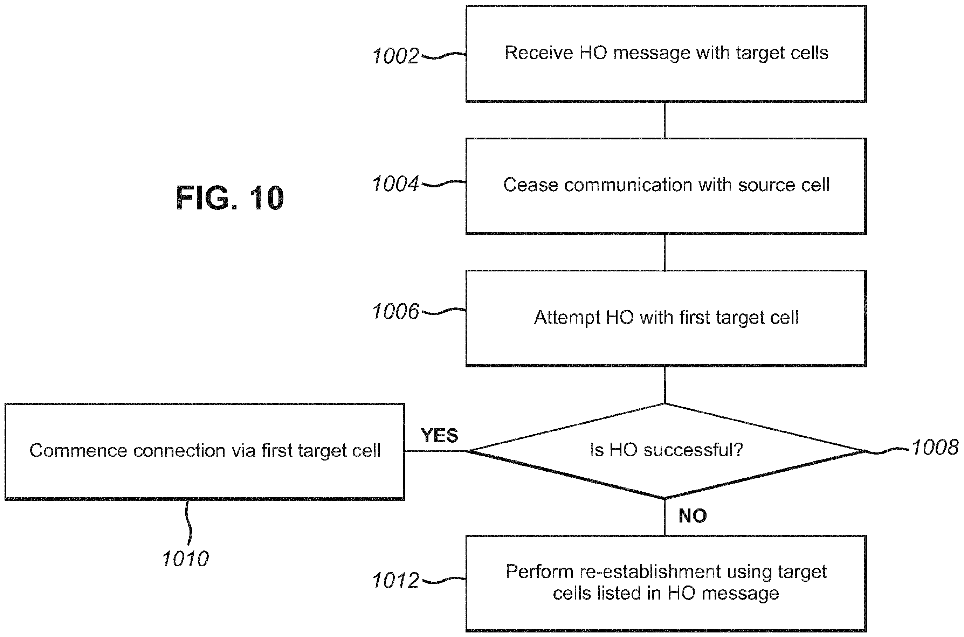

The aforementioned methods may involve a certain amount of processing to be carried out in base stations. For example, the source base station may have to transmit data to multiple target cells, all of which may process that information and, optional, reserve and subsequently relinquish resources. An alternative method is disclosed, with reference to Fig. 10, which reduces the processing required by the base stations.

In the alternative method, once a source base station optionally determines that a mobile device should undergo a handover procedure, it may provide that mobile device with a list candidate target cells, using any of the techniques described above. Optionally, this list can be in priority order, but this is not essential.

As shown in Fig. 10, the mobile device may receive 1002 the list of candidate target cells with the handover instructions as with any of the methods described above. As with the methods described previously, the mobile device will then cease communication 1004 with the source cell and attempt to handover 1006 to the first target cell in the plurality of target cells in the handover message. If handover is successful 1008, the mobile device will commence communication 1010 with the first target cell. If handover is unsuccessful 1008, the mobile device operates slightly differently. Rather than attempt to handover to one or more of the plurality of further target cells when handover to the first or a subsequent target cell fails, the mobile device may instead attempt to perform a cell selection operation in an RRC Connection Reestablishment Procedure 1012 using the list of candidate target cells received in the handover instructions (rather than attempt to perform Stored Information Cell Selection or Initial Cell Selection in accordance with TS36.304, as described above). This alternative method reduces the network load, such as on X2 and S1 interfaces, and also speeds up cell selection. Additionally, this alternative method increases successful reestablishment of a mobile device and may result in the mobile device remaining in an RRC_CONNECTED state without terminating existing telecommunication connections.

Optionally, the mobile device may check the quality of a target cell it selects, prior to attempting to connect to it. A first optional way in which this check may be performed is as follows. The mobile device may compare the signal strength and quality of the selected target cell with a threshold, or with another cell such as the strongest cell from which it receives a signal. If the difference in the signal strength and quality is less than a predetermined signal level and quality thresholds, the mobile device may choose to select the listed cell. If the difference in the signal strength and quality is more than the predetermined signal level and quality thresholds, the mobile device may choose to select the strongest cell. Alternatively, if none of the listed cells satisfy the required threshold, the strongest cell may be selected. Alternatively, if multiple listed cells satisfy the required threshold, the cell with the least difference may be selected.

In one variant of the alternative method, the physical cell identity and the frequency of each prepared target cell are provided in a PreparedTargetCelllnformation list as a new information element in the RRC Connection Reconfiguration message sent by the source base station. Upon detection of a first or subsequent handover failure, the mobile device may perform a cell selection operation for an RRC connection reestablishment procedure.

If the mobile device identifies a PreparedTargetCelllnformation list in the message sent by the source base station, the mobile device may considers each target cell in the list as a candidate for cell selection, instead of performing the Stored Information Cell Selection or Initial Cell Selection procedures specified in TS36.304.

If desired, the mobile device may perform Stored Information Cell Selection or Initial Cell Selection procedures after considering or selecting one or more of the target cells in the PreparedTargetCelllnformation list. Moreover, the mobile device may select the first cell from the PreparedTargetCelllnformation list and stored information (or vice versa) which meets pre-defined cell selection criteria including at least one of received signal level and signal quality. The mobile device may prioritise the PreparedTargetCelllnformation list over the stored information. Alternatively the mobile device may consider all target cells in the PreparedTargetCelllnformation list and stored information and select the best target cell specified therein according to pre-defined cell selection criteria including at least one of received signal level and signal quality.

In a further variant of the alternative method, the source base station may indicate at least one of minimum received signal level and minimum signal quality to be applied to each target cell or all of the target cells in the PreparedTargetCelllnformation list. In this case, the mobile device information received from the source base station may be used in cell selection processes described above.

If desired, the minimum received signal level indicated in the list may be configured to be higher than that broadcast in the system information and the minimum signal quality indicated in the list may be configured to be higher than that broadcast in system information. This allows for a more robust reestablishment procedure.

Alternatively, the minimum received signal level indicated in the list may be configured to be lower than that broadcast in the system information and the minimum signal quality indicated in the list may be configured to be lower than that broadcast in system information. This allows for a faster reestablishment procedure.

An example specification of an entirely new prepared target cell information list suitable for putting the alternative method into effect is given below.

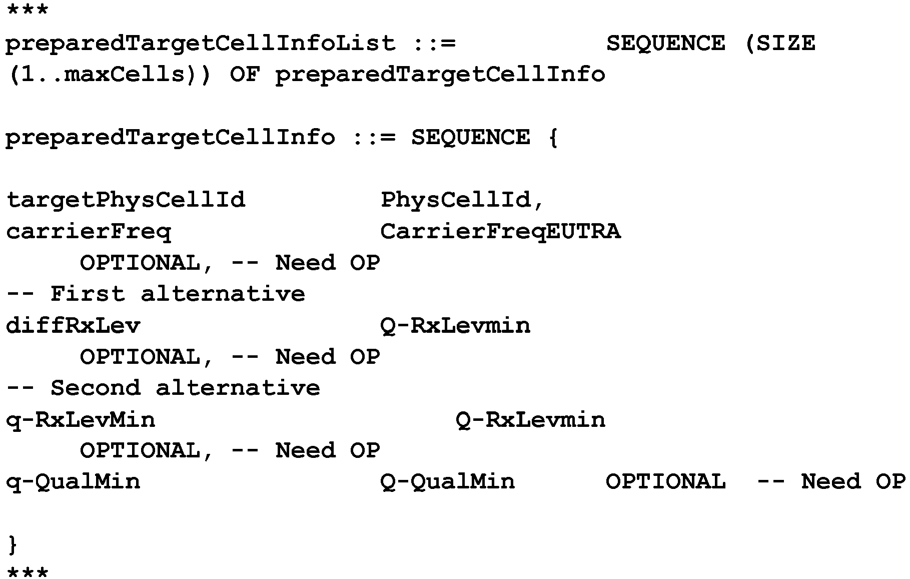

If the aforementioned methods are to be employed in a heterogeneous network, in which a plurality of small cells served by comparatively low powered base stations is used along with macro cells, it may be desirable to minimise interference. Optionally, this may be done by establishing an Enhanced Physical Downlink Control Chanel (EPDCCH) which is transmitted in specific resource blocks. If a target cell for use in a handover procedure is configured with EPDCCH, the handover command sent by the source base station may also include EPDCCH configuration, for example the resource blocks to which EPDCCH is mapped, along with a reference signal. The target base station may utilize EPDCCH in handover procedure or reestablishment procedure in order to increase success ratio and minimise interference.

It will be appreciated that the methods described above may be implemented by a computer readable medium such as memory 214 in the network component 202 in Fig. 2. The memory 214 has computer readable instructions stored thereon. The instructions are adapted, when executed by the processor 204 of the network component 202, to cause the processor 204 to generate handover information for use in any of the handover procedures described above.

It will also be appreciated that the methods described above may be implemented by a computer readable medium such as memory 308 in the mobile device 300 in Fig. 3. The memory 308 has computer readable instructions stored thereon. The instructions are adapted, when executed by the processor 302 of the mobile device 300, to cause the processor 302 to process handover information for use in any of the handover procedures described above.

It will be appreciated that the aforementioned devices and methods have been provided as examples of ways in which the present invention may be put into practice and should not be understood as limiting the scope of the invention which is defined by the appended claims.

## Claims

1. A method performed by a network component (102, 902) for use in a cellular network (1000, 9000), the method comprising:
receiving (1100, 1200, 1300) at the network component at least one communication parameter of at least one candidate target cell transmitted from the mobile device;
determining (1102, 1202, 1302), by the network component, based on the at least one communication parameter, whether to transmit handover information from the network component to the mobile device;
determining a list of a plurality of target cells (100, 900) with which the mobile device may subsequently communicate, wherein the list of target cells is in a priority order in which the mobile device is to attempt handover; and
transmitting handover information (1106, 1206, 1306) from the network component to the mobile device if said determination to transmit handover information is positive;
wherein the handover information comprises:
information including the list of the plurality of target cells (100, 900) with which the mobile device may subsequently communicate;
communication parameters of at least one target cell sufficient for the mobile device to initiate communication with a network component via the at least one target cell without requiring prior coordination of the at least one target cell for communicating with the mobile device; and
communication parameters of additional target cells comprising, or consisting only of, differences between required communication parameters of the additional target cells and the communication parameters of the at least one target cell.

2. The method of claim 1, further comprising initiating a resource allocation procedure (1104, 1204, 1304) of the plurality of target cells, wherein the resource allocation procedure comprises:
communicating directly with one or more network components of the plurality of target cells to reserve resources of said one or more network components of the plurality of target cells for the mobile device; or communicating with one or more network components of the plurality of target cells via a control network component to reserve resources of said one or more network components of the plurality of target cells for the mobile device.

3. The method of claim 2, further comprising, after the mobile device has initiated communication with one of the plurality of target cells, instructing release of resources of each of the one or more network components of the plurality target cells other than the network component with which the mobile device is in communication.

4. A method performed by a mobile device (110, 910) for use in a cellular network (1000, 9000), the method comprising:
determining by the mobile device at least one communication parameter of at least one candidate target cell;
transmitting (1108, 1208, 1308) said at least one communication parameter of said at least one candidate target cell from the mobile device to the source cell; and
receiving handover information (1110, 1210, 1310) at the mobile device from a source cell of the cellular network,
wherein the handover information comprises:
information including a list of a plurality of target cells with which the mobile device may subsequently communicate and the list of target cells is in a priority order in which the mobile device is to attempt handover;
communication parameters of at least one target cell sufficient for the mobile device to initiate communication with a network component via the at least one target cell without requiring prior coordination of the at least one target cell for communicating with the mobile device; and
communication parameters of additional target cells comprising, or consisting only of, differences between required communication parameters of the additional target cells and the communication parameters of the at least one target cell.

5. The method of claim 4, wherein the step of determining by the mobile device at least one communication parameter of at least one candidate target cell comprises measuring the signal strength of the at least one candidate target cell.

6. The method of claim 4 or claim 5, further comprising the mobile device, after receiving the handover information:
ceasing communication (1112, 1212, 1312) with the source cell; and attempting to connect (1114, 1214, 1314) to a first target cell, being a first target cell in the list of the plurality of target cells.

7. The method of claim 6, further comprising the mobile device attempting to connect to the first target cell, and on a failure to connect to the first target cell, the mobile device attempting to connect (1120, 1220, 1320) to a second target cell, being the next target cell after the first target cell specified according to the priority order.

8. The method of any of claims 4 to 7, further comprising, prior to the step of receiving handover information:
determining by the mobile device at least one communication parameter of existing communication of the source cell; and
transmitting said at least one communication parameter of the existing communication from the mobile device to the source cell.

9. The method of any of claims 4 to 8, further comprising, after handover failure, the mobile device performing a reestablishment procedure (1126, 1226, 1326) comprising attempting to connect to one of the plurality of target cells.

10. The method of any preceding claim, wherein the handover information comprises:
a target frequency value or range for communicating with each target cell; and/or
access parameters for each target cell.

11. The method of any preceding claim, wherein the handover information comprises communication parameters of each target cell sufficient for the mobile device to attempt to initiate communication with each target cell without requiring prior coordination of each target cell for communicating with the mobile device.

12. The method of any preceding claim, wherein the handover information comprises cell identification information.

13. The method of claim 12, wherein the handover information comprises communication parameters of a first target cell sufficient for the mobile device to attempt to initiate communication with the first target cell without requiring prior coordination of the first target cell for communicating with the mobile device, and further comprises cell identification information for each subsequent target cell.

14. The method of claim 13, wherein the handover information comprises only cell information, such as a cell identification, for each subsequent target cell.

15. A network component (200) for use in a cellular network, the network having a plurality of cells, the network component comprising:
a processing unit configured to generate handover information; and
a transmitter configured to transmit the handover information to a mobile device,
wherein the processing unit is configured to:
receive at least one communication parameter of at least one candidate target cell transmitted from a mobile device;
determine, based on the at least one communication parameter, whether to transmit the handover information;
determine a list of a plurality of target cells (100, 900) with which the mobile device may subsequently communicate, wherein the list of target cells is in a priority order in which the mobile device is to attempt handover; and
transmit the handover information if said determination to transmit handover information is positive;
wherein the handover information comprises:
information including the list of a plurality of target cells with which the mobile device may subsequently communicate;
communication parameters of at least one target cell sufficient for the mobile device to initiate communication with a network component via the at least one target cell without requiring prior coordination of the at least one target cell for communicating with the mobile device; and
communication parameters of additional target cells comprising, or consisting only of, differences between required communication parameters of the additional target cells and the communication parameters of the at least one target cell.

16. The network component of claim 15, wherein the processing unit is configured to perform the steps of claim 2 or claim 3.

17. A mobile device for communicating in a cellular network, the mobile device comprising:
a processing unit configured to:
determine at least one communication parameter of at least one candidate target cell; and
transmit said at least one communication parameter of said at least one candidate target cell to a source cell; and
a receiver configured to receive handover information;
wherein the processing unit is adapted to process the handover information, and
wherein the handover information comprises:
information including a list of a plurality of target cells with which the mobile device may subsequently communicate, and the list of target cells is in a priority order in which the mobile device is to attempt handover;
communication parameters of at least one target cell sufficient for the mobile device to initiate communication with a network component via the at least one target cell without requiring prior coordination of the at least one target cell for communicating with the mobile device; and
communication parameters of additional target cells comprising, or consisting only of, differences between required communication parameters of the additional target cells and the communication parameters of the at least one target cell.

18. The mobile device of claim 17, wherein the processing unit is configured to measure the signal strength of the at least one candidate target cell.

19. The mobile device of claim 17 or claim 18, wherein the processing unit is further configured to perform the steps of any one of claims 6 to 14.

20. The mobile device of any one of claims 17 to 19, wherein the mobile device is configured to connect to a first target cell, being one of the plurality of target cells, and communicate with said first target cell.

21. A computer readable medium having computer readable instructions stored thereon, wherein the instructions, when run by a processor associated with a network component (102, 902), cause the network component (102, 902) to perform the steps of the method of any of claims 1 to 3.

22. A computer readable medium having computer readable instructions stored thereon, wherein the instructions, when run by a processor associated with a mobile device (110, 910), cause the mobile device (110, 910) to perform the steps of the method of any of claims 4 to 9.

## Patentansprüche

1. Verfahren, das von einer Netzwerkkomponente (102, 902) zur Verwendung in einem zellularen Netzwerk (1000, 9000) durchgeführt wird, wobei das Verfahren Folgendes umfasst:
Empfangen (1100, 1200, 1300), an der Netzwerkkomponente, mindestens eines Kommunikationsparameters von mindestens einer Zielkandidatenzelle, die von der mobilen Vorrichtung übertragen wird;
Bestimmen (1102, 1202, 1302), durch die Netzwerkkomponente, basierend auf dem mindestens einen Kommunikationsparameter, ob Übergabeinformationen von der Netzwerkkomponente an die mobile Vorrichtung übertragen werden sollen;
Bestimmen einer Liste einer Vielzahl von Zielzellen (100, 900), mit denen die mobile Vorrichtung anschließend kommunizieren kann, wobei sich die Liste der Zielzellen in einer Prioritätsreihenfolge befindet, in der die mobile Vorrichtung eine Übergabe versuchen soll; und
Übertragen von Übergabeinformationen (1106, 1206, 1306) von der Netzwerkkomponente an die mobile Vorrichtung, wenn die Bestimmung zum Übertragen von Übergabeinformationen positiv ist;
wobei die Übergabeinformationen Folgendes umfassen:
Informationen, die die Liste der Vielzahl von Zielzellen (100, 900) umfassen, mit denen die mobile Vorrichtung anschließend kommunizieren kann;
Kommunikationsparameter von mindestens einer Zielzelle, die ausreichen, damit die mobile Vorrichtung die Kommunikation mit einer Netzwerkkomponente über die mindestens eine Zielzelle ohne vorherige Koordination der mindestens einen Zielzelle für die Kommunikation mit der mobilen Vorrichtung initiieren kann; und
Kommunikationsparameter zusätzlicher Zielzellen, die Unterschiede zwischen erforderlichen Kommunikationsparametern der zusätzlichen Zielzellen und den Kommunikationsparametern der mindestens einen Zielzelle umfassen oder nur daraus bestehen.

2. Verfahren nach Anspruch 1, das ferner das Initiieren eines Ressourcenzuweisungsverfahrens (1104, 1204, 1304) der Vielzahl von Zielzellen umfasst, wobei das Ressourcenzuweisungsverfahren Folgendes umfasst:
direktes Kommunizieren mit einer oder mehreren Netzwerkkomponenten der Vielzahl von Zielzellen, um Ressourcen der einen oder mehreren Netzwerkkomponenten der Vielzahl von Zielzellen für die mobile Vorrichtung zu reservieren; oder Kommunizieren mit einer oder mehreren Netzwerkkomponenten der Vielzahl von Zielzellen über eine Steuernetzwerkkomponente, um Ressourcen der einen oder mehreren Netzwerkkomponenten der Vielzahl von Zielzellen für die mobile Vorrichtung zu reservieren.

3. Verfahren nach Anspruch 2, das ferner Folgendes umfasst: nachdem die mobile Vorrichtung die Kommunikation mit einer der Vielzahl von Zielzellen initiiert hat, Anweisen zur Freigabe von Ressourcen für jede der einen oder mehreren Netzwerkkomponenten der Vielzahl von Zielzellen außer der Netzwerkkomponente, mit der die mobile Vorrichtung kommuniziert.

4. Verfahren, das von einer mobilen Vorrichtung (110, 910) zur Verwendung in einem zellularen Netzwerk (1000, 9000) durchgeführt wird, wobei das Verfahren Folgendes umfasst:
Bestimmen von mindestens einem Kommunikationsparameter von mindestens einer Kandidatenzielzelle durch die mobile Vorrichtung;
Übertragen (1108, 1208, 1308) des mindestens einen Kommunikationsparameters der mindestens einen Kandidatenzielzelle von der mobilen Vorrichtung zur Quellzelle; und
Empfangen von Übergabeinformationen (1110, 1210, 1310) an der mobilen Vorrichtung von einer Quellzelle des zellularen Netzwerks,
wobei die Übergabeinformationen Folgendes umfassen:
Informationen, die eine Liste einer Vielzahl von Zielzellen umfassen, mit denen die mobile Vorrichtung anschließend kommunizieren kann, wobei sich die Liste der Zielzellen in einer Prioritätsreihenfolge befindet, in der die mobile Vorrichtung eine Übergabe versuchen soll;
Kommunikationsparameter von mindestens einer Zielzelle, die für die mobile Vorrichtung ausreichend sind, um die Kommunikation mit einer Netzwerkkomponente über die mindestens eine Zielzelle zu initiieren, ohne dass zuvor eine Koordination der mindestens einen Zielzelle für die Kommunikation mit der mobilen Vorrichtung erforderlich ist; und
Kommunikationsparameter zusätzlicher Zielzellen, die Unterschiede zwischen erforderlichen Kommunikationsparametern der zusätzlichen Zielzellen und den Kommunikationsparametern der mindestens einen Zielzelle umfassen oder nur daraus bestehen.

5. Verfahren nach Anspruch 4, wobei der Schritt des Bestimmens, durch die mobile Vorrichtung, mindestens eines Kommunikationsparameters von mindestens einer Kandidatenzielzelle das Messen der Signalstärke der mindestens einen Kandidatenzielzelle umfasst.

6. Verfahren nach Anspruch 4 oder Anspruch 5, das ferner umfasst, dass die mobile Vorrichtung, nach Empfang der Übergabeinformationen, Folgendes ausführt:
Unterbrechen der Kommunikation (1112, 1212, 1312) mit der Quellzelle; und
Versuchen, eine Verbindung (1114, 1214, 1314) mit einer ersten Zielzelle herzustellen, die eine erste Zielzelle in der Liste der Vielzahl von Zielzellen ist.

7. Verfahren nach Anspruch 6, das ferner umfasst, dass die mobile Vorrichtung versucht, eine Verbindung zu der ersten Zielzelle herzustellen, und wenn keine Verbindung zur ersten Zielzelle hergestellt werden kann, dass die mobile Vorrichtung versucht, eine Verbindung zu einer zweiten Zielzelle herzustellen (1120, 1220, 1320), die die nächste Zielzelle nach der ersten Zielzelle ist, die gemäß der Prioritätsreihenfolge angegeben wurde.

8. Verfahren nach einem der Ansprüche 4 bis 7, das vor dem Schritt des Empfangens von Übergabeinformationen ferner Folgendes umfasst:
Bestimmen mindestens eines Kommunikationsparameters der vorhandenen Kommunikation der Quellzelle durch die mobile Vorrichtung; und
Übertragen des mindestens einen Kommunikationsparameters der vorhandenen Kommunikation von der mobilen Vorrichtung zur Quellzelle.

9. Verfahren nach einem der Ansprüche 4 bis 8, das nach einem Übergabefehler ferner umfasst, dass die mobile Vorrichtung ein Wiederherstellungsverfahren (1126, 1226, 1326) durchführt, das den Versuch umfasst, eine Verbindung mit einer der Vielzahl von Zielzellen herzustellen.

10. Verfahren nach einem vorhergehenden Anspruch, wobei die Übergabeinformationen Folgendes umfassen:
einen Zielfrequenzwert oder -bereich für die Kommunikation mit jeder Zielzelle und/oder
Zugriffsparameter für jede Zielzelle.

11. Verfahren nach einem der vorhergehenden Ansprüche, wobei die Übergabeinformationen Kommunikationsparameter jeder Zielzelle umfassen, die für die mobile Vorrichtung ausreichend sind, um zu versuchen, die Kommunikation mit jeder Zielzelle zu initiieren, ohne dass zuvor eine Koordination jeder Zielzelle für die Kommunikation mit der mobilen Vorrichtung erforderlich ist.

12. Verfahren nach einem vorhergehenden Anspruch, wobei die Übergabeinformationen Zellidentifikationsinformationen umfassen.

13. Verfahren nach Anspruch 12, wobei die Übergabeinformationen Kommunikationsparameter einer ersten Zielzelle umfassen, die für die mobile Vorrichtung ausreichend sind, um zu versuchen, die Kommunikation mit der ersten Zielzelle zu initiieren, ohne dass zuvor eine Koordination der ersten Zielzelle für die Kommunikation mit dem mobilen Vorrichtung erforderlich ist, und ferner Zellidentifikationsinformationen für jede nachfolgende Zielzelle umfassen.

14. Verfahren nach Anspruch 13, wobei die Übergabeinformationen nur Zellinformationen, wie beispielsweise eine Zellidentifikation, für jede nachfolgende Zielzelle umfassen.

15. Netzwerkkomponente (200) zur Verwendung in einem zellularen Netzwerk, wobei das Netzwerk eine Vielzahl von Zellen aufweist, wobei die Netzwerkkomponente Folgendes umfasst:
eine Verarbeitungseinheit, die dafür konfiguriert ist, Übergabeinformationen zu erzeugen; und
einen Sender, der dafür konfiguriert ist, die Übergabeinformationen an eine mobile Vorrichtung zu übertragen,
wobei die Verarbeitungseinheit für Folgendes konfiguriert ist:
Empfangen mindestens eines Kommunikationsparameters von mindestens einer Kandidatenzielzelle, die von einer mobilen Vorrichtung übertragen wird;
Bestimmen anhand des mindestens einen Kommunikationsparameters, ob die Übergabeinformationen übertragen werden sollen;
Bestimmen einer Liste einer Vielzahl von Zielzellen (100, 900), mit denen die mobile Vorrichtung anschließend kommunizieren kann, wobei sich die Liste der Zielzellen in einer Prioritätsreihenfolge befindet, in der die mobile Vorrichtung eine Übergabe versuchen soll; und
Übertragen der Übergabeinformationen, wenn die Bestimmung zum Übertragen von Übergabeinformationen positiv ist;
wobei die Übergabeinformationen Folgendes umfassen:
Informationen, die die Liste einer Vielzahl von Zielzellen umfassen, mit denen die mobile Vorrichtung anschließend kommunizieren kann;
Kommunikationsparameter von mindestens einer Zielzelle, die ausreichen, damit die mobile Vorrichtung die Kommunikation mit einer Netzwerkkomponente über die mindestens eine Zielzelle ohne vorherige Koordination der mindestens einen Zielzelle für die Kommunikation mit der mobilen Vorrichtung initiieren kann; und
Kommunikationsparameter zusätzlicher Zielzellen, die Unterschiede zwischen erforderlichen Kommunikationsparametern der zusätzlichen Zielzellen und den Kommunikationsparametern der mindestens einen Zielzelle umfassen oder nur daraus bestehen.

16. Netzwerkkomponente nach Anspruch 15, wobei die Verarbeitungseinheit dafür konfiguriert ist, die Schritte nach Anspruch 2 oder Anspruch 3 auszuführen.

17. Mobile Vorrichtung zur Kommunikation in einem zellularen Netzwerk, wobei die mobile Vorrichtung Folgendes umfasst:
eine Verarbeitungseinheit, die für Folgendes konfiguriert ist:
Bestimmen mindestens eines Kommunikationsparameters von mindestens einer Kandidatenzielzelle; und
Übertragen des mindestens einen Kommunikationsparameters der mindestens einen Kandidatenzielzelle zu einer Quellzelle; und
einen Empfänger, der zum Empfangen von Übergabeinformationen konfiguriert ist;
wobei die Verarbeitungseinheit dafür ausgelegt ist, die Übergabeinformationen zu verarbeiten, und
wobei die Übergabeinformationen Folgendes umfassen:
Informationen, die eine Liste einer Vielzahl von Zielzellen umfassen, mit denen die mobile Vorrichtung anschließend kommunizieren kann, wobei sich die Liste der Zielzellen in einer Prioritätsreihenfolge befindet, in der die mobile Vorrichtung eine Übergabe versuchen soll;
Kommunikationsparameter von mindestens einer Zielzelle, die ausreichen, damit die mobile Vorrichtung die Kommunikation mit einer Netzwerkkomponente über die mindestens eine Zielzelle ohne vorherige Koordination der mindestens einen Zielzelle für die Kommunikation mit der mobilen Vorrichtung initiieren kann; und
Kommunikationsparameter zusätzlicher Zielzellen, die Unterschiede zwischen erforderlichen Kommunikationsparametern der zusätzlichen Zielzellen und den Kommunikationsparametern der mindestens einen Zielzelle umfassen oder nur daraus bestehen.

18. Mobile Vorrichtung nach Anspruch 17, wobei die Verarbeitungseinheit dafür konfiguriert ist, die Signalstärke der mindestens einen Kandidatenzielzelle zu messen.

19. Mobile Vorrichtung nach Anspruch 17 oder Anspruch 18, wobei die Verarbeitungseinheit ferner dafür konfiguriert ist, die Schritte nach einem der Ansprüche 6 bis 14 auszuführen.

20. Mobile Vorrichtung nach einem der Ansprüche 17 bis 19, wobei die mobile Vorrichtung dafür konfiguriert ist, eine Verbindung mit einer ersten Zielzelle herzustellen, die eine der Vielzahl von Zielzellen ist, und mit der ersten Zielzelle zu kommunizieren.

21. Computerlesbares Medium, auf dem computerlesbare Anweisungen gespeichert sind, wobei die Anweisungen, wenn sie von einem Prozessor ausgeführt werden, der einer Netzwerkkomponente (102, 902) zugeordnet ist, die Netzwerkkomponente (102, 902) veranlassen, die Schritte des Verfahrens nach einem der Ansprüche 1 bis 3 auszuführen.

22. Computerlesbares Medium, auf dem computerlesbare Anweisungen gespeichert sind, wobei die Anweisungen, wenn sie von einem Prozessor ausgeführt werden, der einer mobilen Vorrichtung (110, 910) zugeordnet ist, die mobile Vorrichtung (110, 910) veranlassen, die Schritte des Verfahrens nach einem der Ansprüche 4 bis 9 auszuführen.

## Revendications

1. Procédé effectué par un composant de réseau (102, 902) à des fins d'utilisation dans un réseau cellulaire (1000, 9000), le procédé comportant les étapes consistant à :
recevoir (1100, 1200, 1300) au niveau du composant de réseau au moins un paramètre de communication d'au moins une cellule cible candidate qui est transmis en provenance du dispositif mobile ;
déterminer (1102, 1202, 1302), par le composant de réseau, en fonction dudit au moins un paramètre de communication, s'il faut transmettre des informations de transfert intercellulaire en provenance du composant de réseau au dispositif mobile ;
déterminer une liste d'une pluralité de cellules cibles (100, 900) avec lesquelles le dispositif mobile puisse communiquer par la suite, dans lequel la liste de cellules cibles est dans un ordre de priorité dans lequel le dispositif mobile va tenter un transfert intercellulaire ; et
transmettre des informations de transfert intercellulaire (1106, 1206, 1306) en provenance du composant de réseau au dispositif mobile si ladite détermination comme quoi il faut transmettre des informations de transfert intercellulaire est positive ;
dans lequel les informations de transfert intercellulaire comportent :
des informations comprenant la liste de la pluralité de cellules cibles (100, 900) avec lesquelles le dispositif mobile puisse communiquer par la suite ;
des paramètres de communication d'au moins une cellule cible qui suffisent pour que le dispositif mobile initialise la communication avec un composant de réseau par le biais de ladite au moins une cellule cible sans nécessiter une coordination préalable de ladite au moins une cellule cible à des fins de communication avec le dispositif mobile ; et
des paramètres de communication de cellules cibles supplémentaires comportant des, ou consistant uniquement de, différences entre des paramètres de communication requis des cellules cibles supplémentaires et les paramètres de communication de ladite au moins une cellule cible.

2. Procédé selon la revendication 1, comportant par ailleurs l'étape consistant à initialiser une procédure d'attribution de ressources (1104, 1204, 1304) de la pluralité de cellules cibles, dans lequel la procédure d'attribution de ressources comporte les étapes consistant à :
communiquer directement avec un ou plusieurs composants de réseau de la pluralité de cellules cibles pour réserver des ressources desdits un ou plusieurs composants de réseau de la pluralité de cellules cibles pour le dispositif mobile ; ou
communiquer avec un ou plusieurs composants de réseau de la pluralité de cellules cibles par le biais d'un comportant de réseau de commande pour réserver des ressources desdits un ou plusieurs composants de réseau de la pluralité de cellules cibles pour le dispositif mobile.

3. Procédé selon la revendication 2, comportant par ailleurs, après que le dispositif mobile a initialisé une communication avec l'une de la pluralité de cellules cibles, l'étape consistant à ordonner la libération de ressources de chacun desdits un ou plusieurs composants de réseau de la pluralité de cellules cibles autres que le composant de réseau avec lequel le dispositif mobile est en communication.

4. Procédé effectué par un dispositif mobile (110, 910) à des fins d'utilisation dans un réseau cellulaire (1000, 9000), le procédé comportant les étapes consistant à :
déterminer par le dispositif mobile au moins un paramètre de communication d'au moins une cellule cible candidate ;
transmettre (1108, 1208, 1308) ledit au moins un paramètre de communication de ladite au moins une cellule cible candidate en provenance du dispositif mobile à la cellule de source ; et
recevoir des informations de transfert intercellulaire (1110, 1210, 1310) au niveau du dispositif mobile en provenance d'une cellule de source du réseau cellulaire,
dans lequel les informations de transfert intercellulaire comportent :
des informations comprenant une liste d'une pluralité de cellules cibles avec lesquelles le dispositif mobile puisse communiquer par la suite et la liste de cellules cibles est dans un ordre de priorité dans lequel le dispositif mobile va tenter un transfert intercellulaire ;
des paramètres de communication d'au moins une cellule cible qui suffisent pour que le dispositif mobile initialise la communication avec un composant de réseau par le biais de ladite au moins une cellule cible sans nécessiter une coordination préalable de ladite au moins une cellule cible à des fins de communication avec le dispositif mobile ; et
des paramètres de communication de cellules cibles supplémentaires comportant des, ou consistant uniquement de, différences entre des paramètres de communication requis des cellules cibles supplémentaires et les paramètres de communication de ladite au moins une cellule cible.

5. Procédé selon la revendication 4, dans lequel l'étape consistant à déterminer par le dispositif mobile au moins un paramètre de communication d'au moins une cellule cible candidate comporte l'étape consistant à mesurer la puissance du signal de ladite au moins une cellule cible candidate.

6. Procédé selon la revendication 4 ou la revendication 5, comportant par ailleurs le dispositif mobile, après avoir reçu les informations de transfert intercellulaire, qui effectue les étapes consistant à :
cesser la communication (1112, 1212, 1312) avec la cellule de source; et
tenter une connexion (1114, 1214, 1314) à une première cellule cible, qui est une première cellule cible dans la liste de la pluralité de cellules cibles.

7. Procédé selon la revendication 6, comportant par ailleurs le dispositif mobile qui tente une connexion à la première cellule cible, et en cas d'échec de connexion à la première cellule cible, le dispositif mobile tente une connexion (1120, 1220, 1320) à une deuxième cellule cible, qui est la cellule cible suivante après la première cellule cible spécifiée en fonction de l'ordre de priorité.

8. Procédé selon l'une quelconque des revendications 4 à 7, comportant par ailleurs, avant l'étape consistant à recevoir des informations de transfert intercellulaire, les étapes consistant à :
déterminer par le dispositif mobile au moins un paramètre de communication de la communication existante de la cellule de source ; et
transmettre ledit au moins un paramètre de communication de la communication existante en provenance du dispositif mobile à la cellule de source.

9. Procédé selon l'une quelconque des revendications 4 à 8, comportant par ailleurs, après un échec de transfert intercellulaire, le dispositif mobile qui effectue une procédure de rétablissement (1126, 1226, 1326) comportant l'étape consistant à tenter une connexion à l'une de la pluralité de cellules cibles.

10. Procédé selon l'une quelconque des revendications précédentes, dans lequel les informations de transfert intercellulaire comportent :
une plage ou une valeur de fréquence cible permettant de communiquer avec chaque cellule cible ; et/or
des paramètres d'accès pour chaque cellule cible.

11. Procédé selon l'une quelconque des revendications précédentes, dans lequel les informations de transfert intercellulaire comportent des paramètres de communication de chaque cellule cible qui suffisent pour que le dispositif mobile tente d'initialiser une communication avec chaque cellule cible sans nécessiter de coordination préalable de chaque cellule cible à des fins de communication avec le dispositif mobile.

12. Procédé selon l'une quelconque des revendications précédentes, dans lequel les informations de transfert intercellulaire comportent des informations d'identification de cellule.

13. Procédé selon la revendication 12, dans lequel les informations de transfert intercellulaire comportent des paramètres de communication d'une première cellule cible qui suffisent pour que le dispositif mobile tente d'initialiser une communication avec la première cellule cible sans nécessiter de coordination préalable de la première cellule cible à des fins de communication avec le dispositif mobile, et comportent par ailleurs des informations d'identification de cellule pour chaque cellule cible suivante.

14. Procédé selon la revendication 13, dans lequel les informations de transfert intercellulaire comportent uniquement des informations de cellule, telles que l'identification d'une cellule, pour chaque cellule cible suivante.

15. Composant de réseau (200) servant à des fins d'utilisation dans un réseau cellulaire, le réseau ayant une pluralité de cellules, le composant de réseau comportant :
une unité de traitement configurée pour générer des informations de transfert intercellulaire ; et
un transmetteur configuré pour transmettre les informations de transfert intercellulaire à un dispositif mobile,
dans lequel l'unité de traitement est configurée pour :
recevoir au moins un paramètre de communication d'au moins une cellule cible candidate qui est transmis en provenance d'un dispositif mobile ;
déterminer, en fonction dudit au moins un paramètre de communication, s'il faut transmettre les informations de transfert intercellulaire ;
déterminer une liste d'une pluralité de cellules cibles (100, 900) avec lesquelles le dispositif mobile puisse communiquer par la suite, dans lequel la liste de cellules cibles est dans un ordre de priorité dans lequel le dispositif mobile va tenter un transfert intercellulaire ; et
transmettre les informations de transfert intercellulaire si ladite détermination comme quoi il faut transmettre des informations de transfert intercellulaire est positive ;
dans lequel les informations de transfert intercellulaire comportent :
des informations comprenant la liste d'une pluralité de cellules cibles avec lesquelles le dispositif mobile puisse communiquer par la suite ;
des paramètres de communication d'au moins une cellule cible qui suffisent pour que le dispositif mobile initialise la communication avec un composant de réseau par le biais de ladite au moins une cellule cible sans nécessiter une coordination préalable de ladite au moins une cellule cible à des fins de communication avec le dispositif mobile ; et
des paramètres de communication de cellules cibles supplémentaires comportant des, ou consistant uniquement de, différences entre des paramètres de communication requis des cellules cibles supplémentaires et les paramètres de communication de ladite au moins une cellule cible.

16. Composant de réseau selon la revendication 15, dans lequel l'unité de traitement est configurée pour effectuer les étapes selon la revendication 2 ou la revendication 3.

17. Dispositif mobile servant à des fins de communication dans un réseau cellulaire, le dispositif mobile comportant :
une unité de traitement configurée pour :
déterminer au moins un paramètre de communication d'au moins une cellule cible candidate ; et
transmettre ledit au moins un paramètre de communication de ladite au moins une cellule cible candidate à une cellule de source ; et
un récepteur configuré pour recevoir des informations de transfert intercellulaire ;
dans lequel l'unité de traitement est adaptée pour traiter les informations de transfert intercellulaire, et
dans lequel les informations de transfert intercellulaire comportent :
des informations comprenant une liste d'une pluralité de cellules cibles avec lesquelles le dispositif mobile puisse communiquer par la suite, et la liste de cellules cibles est dans un ordre de priorité dans lequel le dispositif mobile va tenter un transfert intercellulaire ;
des paramètres de communication d'au moins une cellule cible qui suffisent pour que le dispositif mobile initialise la communication avec un composant de réseau par le biais de ladite au moins une cellule cible sans nécessiter une coordination préalable de ladite au moins une cellule cible à des fins de communication avec le dispositif mobile ; et
des paramètres de communication de cellules cibles supplémentaires comportant des, ou consistant uniquement de, différences entre des paramètres de communication requis des cellules cibles supplémentaires et les paramètres de communication de ladite au moins une cellule cible.

18. Dispositif mobile selon la revendication 17, dans lequel l'unité de traitement est configurée pour mesurer la puissance du signal de ladite au moins une cellule cible candidate.

19. Dispositif mobile selon la revendication 17 ou la revendication 18, dans lequel l'unité de traitement est par ailleurs configurée pour effectuer les étapes selon l'une quelconque des revendications 6 à 14.

20. Dispositif mobile selon l'une quelconque des revendications 17 à 19, dans lequel le dispositif mobile est configuré à des fins de connexion à une première cellule cible, qui est l'une de la pluralité de cellules cibles, et à des fins de communication avec la première cellule cible.

21. Support lisible par ordinateur ayant des instructions lisibles par ordinateur stockées sur celui-ci, dans lequel les instructions, quand elles sont exécutées par un processeur associé à un composant de réseau (102, 902), amènent le composant de réseau (102, 902) à effectuer les étapes du procédé selon l'une quelconque des revendications 1 à 3.

22. Support lisible par ordinateur ayant des instructions lisibles par ordinateur stockées sur celui-ci, dans lequel les instructions, quand elles sont exécutées par un processeur associé à un dispositif mobile (110, 910), amènent le dispositif mobile (110, 910) à effectuer les étapes du procédé selon l'une quelconque des revendications 4 à 9.
